# EUROPEAN PATENT SPECIFICATION

(11) **EP 3 842 289 B1**
(45) Date of publication and mention of the grant of the patent: **30.11.2022**
(21) Application number: 20207965.3
(22) Date of filing: 17.11.2020
(51) Int. Cl.: B60R 7/08, E02F 9/16

(54) **WORKING MACHINE INCLUDING STORAGE STRUCTURE FOR STORING A PRINTED MATTER**
ARBEITSMASCHINE MIT EINER AUFBEWAHRUNGSSTRUKTUR ZUM AUFBEWAHREN VON DRUCKERZEUGNISSEN
MACHINE DE TRAVAIL COMPRENANT UNE STRUCTURE DE RANGEMENT POUR RANGER UNE MATIÈRE IMPRIMÉE

(30) Priority: 24.12.2019 JP 2019233218
(43) Date of publication of application: 30.06.2021
(73) Proprietor: KUBOTA CORPORATION, Osaka-shi, Osaka 556-8601 (JP)
(72) Inventor: NISHIGORI, Yoichi, Sakai-shi, Osaka 590-0823 (JP); OMORI, Hideki, Sakai-shi, Osaka 590-0823 (JP)
(74) Representative: LBP Lemcke, Brommer & Partner Patentanwälte mbB

(56) References cited:
- JP-A- 2005 053 348
- JP-A- 2008 063 812
- US-A1- 2015 218 778

## Description

### BACKGROUND OF THE INVENTION

### Field of the Invention

The present invention relates to a working machine, such as an excavator, including a storage structure for storing a printed matter.

### Description of the Related Art

In a known working machine, as disclosed in JP 2006-062424 A, a storage section for storing a manual or so on is disposed under a front portion of an operator's seat. An operator sitting on the seat can take out the manual or so on from the storage section.
Document JP 2005 053348 A describes a construction machine provided with a storage box having an upper opening inside a cab, inside a glass window in which plates are arranged with a constant interval and the side or lower portion of the plate is fixed to an inner panel. Document JP 2008 063812 A describes a console box mounting structure for a construction machine including a plurality of support members.
Document US 2015/218778 A1 describes a working machine according to the preamble of claim 1 with a cab having an internal space, including an operator's seat, a side window, a console, an air-conditioning apparatus, and a cover. The operator's seat is arranged on a floor surface of the cab in the internal space. The side window is arranged laterally to the operator's seat. The console is arranged between the operator's seat and the side window.

### SUMMARY OF THE INVENTION

In the known working machine, it is difficult for the operator sitting on the seat to find the manual stored in the storage section below the seat so that the operator cannot easily realize where the manual is disposed. On the other hand, if a storage section for storing a manual is disposed forward from the operator's seat, the storage section may be obstructive to the operator's front view and the operator's manipulation of control levers or so on, thereby hindering the operator from operating the working machine.

In consideration of the above-mentioned problem, an object of one embodiment according to the present invention is to provide a working machine in which a printed matter such as a manual is disposed so that an operator can easily find the printed matter, and the printed matter does not disturb the operator's operation of the working machine.

According to the invention, the working machine comprises a machine body, an operator's seat mounted on the machine body, an operation base disposed on a lateral side of the operator's seat, a protection unit accommodating the operator's seat including a seat board portion and a backrest portion, and the operation base in an interior thereof, a printed matter, and a storage structure for storing the printed matter. The storage structure is provided between the protection unit and the operation base.

The working machine comprises an operation lever disposed on the operation base to operate a working device provided on the machine body, wherein the storage structure is disposed rearward from the operation lever with respect to the machine body.

In the working machine, the storage structure is configured to allow the printed matter stored therein to be slanted so that an upper portion of the printed matter is positioned rearward farther away from the operation lever than a lower portion thereof.

In the working machine, the storage structure is configured to allow the printed matter stored therein to position an upper portion of the printed matter above an upper face of the operation base.

In the working machine, the operator's seat includes a seat board portion and a backrest portion, and the storage structure is configured to allow the printed matter stored therein to position the printed matter forward from the backrest portion with respect to the machine body.

The working machine further comprises a string connecting between the printed matter at one end thereof and the protection unit at the other end thereof.

The working machine may further comprise a lining attached to the protection unit, wherein at least a part of the storage structure is formed integrally with the lining.

In the working machine, the protection unit may comprise a frame structure including a plurality of pillars, and an exterior cover attached to the frame structure, wherein an inner face of the storage structure facing inside the protection unit is defined by the exterior cover.

In the working machine, the protection unit may include a window member provided on the face thereof facing to the operation base, on which the storage structure is provided, the storage structure may be disposed below the window member.

In the working machine, the storage structure may include a bottom wall to support a lower central portion of the printed matter, the bottom wall being slanted rearwardly downward with respect to the machine body.

The working machine may further comprise a lining attached to the protection unit, the lining containing a rear lining member which includes a closing board and a holding tab opposed each other in a width direction of the machine body so as to define a storage space of the storage structure in between for storing the printed matter.

The working machine may further comprise a lining attached to the protection unit, the lining containing a rear lining member which is integrally formed to define a storage space of the storage structure for storing the printed matter.

Due to the above mentioned configuration, in the working machine, the printed matter such as a manual can be disposed so that an operator can easily find the printed matter, and the printed matter does not disturb the operator's operation of the working machine.

### BRIEF DESCRIPTION OF THE DRAWINGS

It is to be understood that the attached drawings are for purposes of illustrating the concepts of the invention and may not be to scale. Identical reference numerals have been used, where possible, to designate identical features that are common to the figures:
FIG. 1A is a front left perspective view of a protection unit;
FIG. 1B is a front right perspective view of the protection unit;
FIG. 2 is a perspective view of a part of the protection unit after being disassembled and a first lining prepared to be attached to the part of the protection unit;
FIG. 3 is a front left perspective view of an operator's seat and its surroundings;
FIG. 4 is a left side view of the operator's seat and its surroundings, illustrating a positional relation thereof to a connection frame;
FIG. 5 is a fragmentary plan view of the operator's seat and its surroundings;
FIG. 6 is a front view of a portion under the operator's seat;
FIG. 7 is a front left perspective view of a rear lining member with a storage structure;
FIG. 8 is a front right perspective view of the rear lining member with the storage structure;
FIG. 9 is a perspective view of the storage structure, illustrating a printed matter taken out of the storage structure, and that stored by the storage structure;
FIG. 10 is a left side view of the rear lining member with the storage structure;
FIG. 11 is a right side view of the rear lining member with the storage structure;
FIG. 12 is a first sectional view of the storage structure;
FIG. 13 is a second sectional view of the storage structure;
FIG. 14 is a left side view of the storage structure, illustrating a relation thereof to an operation base;
FIG. 15 is a side view of a working machine; and
FIG. 16 is a plan view of the working machine.

### DETAILED DESCRIPTION OF THE PREFERRED EMBODIMENTS

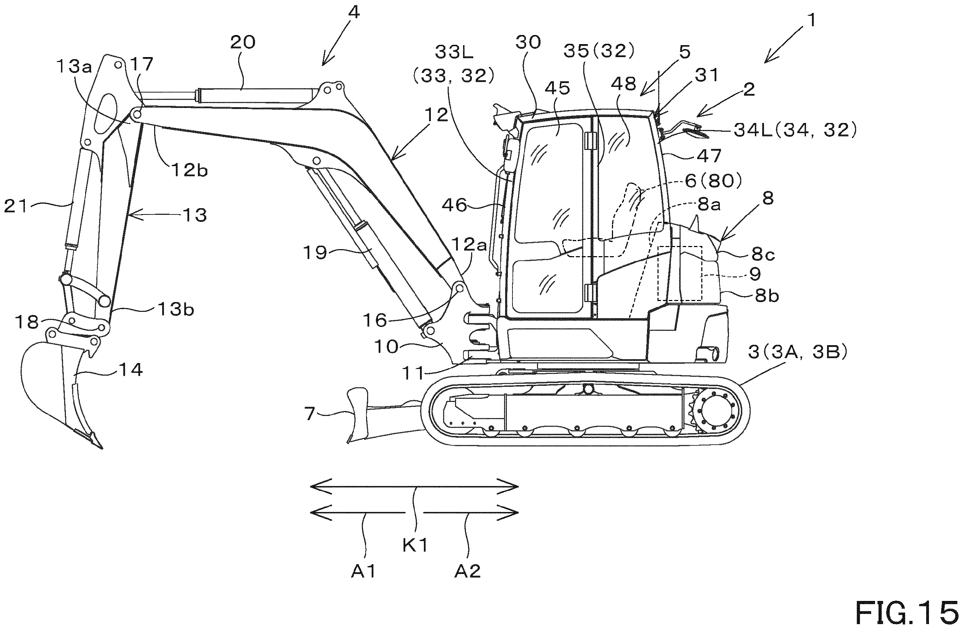

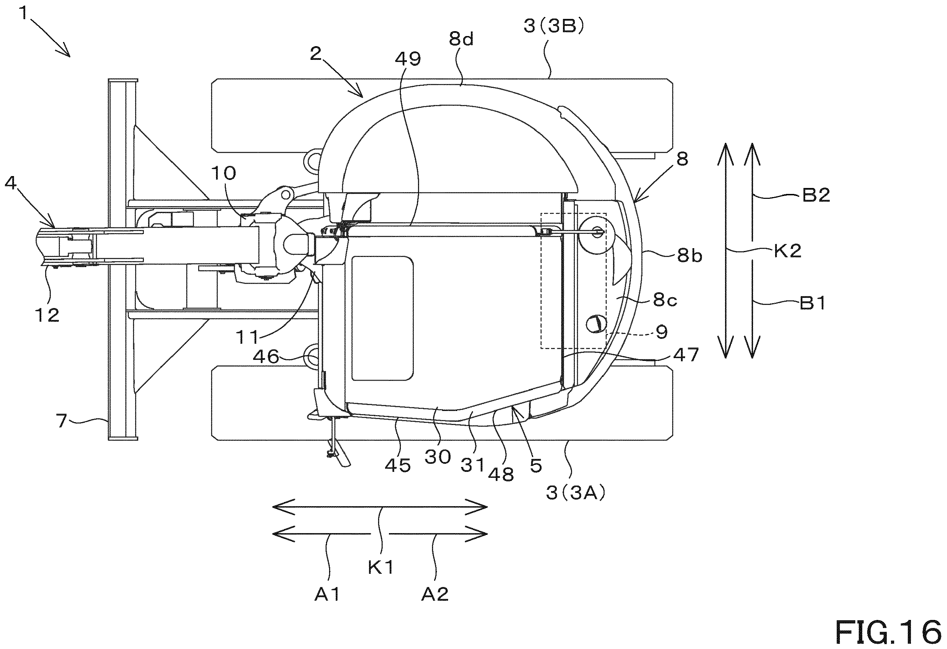

An embodiment of the present invention will be described with reference to the accompanying drawings. FIG. 15 is a schematic side view of a working machine 1 in entirety according to the present embodiment. FIG. 16 is a schematic plan view of the working machine 1. In the present embodiment, a swivel excavator serves as the working machine 1.

Referring to FIGS. 15 and 16, the working machine 1 includes a machine body (turntable) 2, a travel device 3, and a working device 4. An operator's seat 6 (hereinafter simply referred to as "seat 6") is mounted on the machine body 2, and a protection unit 5 is mounted on the machine body 2 to protectively cover the seat 6.

In the following description of the present embodiment, directional terms such as "fore-and-aft", "front", "forward", "rear", "rearward", "lateral", "left", "leftward", "right", "rightward" and derivatives thereof mean respective directions of the machine body 2, i.e., respective directions defined with respect to the machine body 2, regardless of the rotational position variation of the machine body 2 relative to the travel device 3, on an assumption that the "front" or "forward" direction of the machine body 2 corresponds to the straight viewing direction of an operator who sits on the seat 6 and faces in his/her normal forward direction. Referring to FIGS. 15 and 16, the "fore-and-aft" direction of the machine body 2 is illustrated as a both directional arrowed direction K1 (hereinafter referred to as "fore-and-aft direction K1"), the "front" or "forward" direction of the machine body 2 is illustrated as an arrowed direction A1 along the fore-and-aft direction K1, and the "rear" or "rearward" direction of the machine body 2 is illustrated as another arrowed direction A2 along the fore-and-aft direction K1 opposite to the arrowed direction A1. In this regard, referring to FIG. 16, the "lateral" or "width" direction of the machine body 2 is defined as a horizontal direction perpendicular to the fore-and-aft direction of the machine body 2, and is illustrated as a both directional arrowed direction K2 (hereinafter referred to as "lateral direction K2"). The "left" or "leftward" direction of the machine body 2 is defined as a direction corresponding to the leftward viewing direction of the operator normally sitting on the seat 6 as mentioned above, and is illustrated as an arrowed direction B1 along the lateral direction K2. The "right" or "rightward" direction of the machine body 2 is defined as a direction corresponding to the rightward viewing direction of the operator in the same state, and is illustrated as another arrowed direction B2 along the lateral direction K2 opposite to the arrowed direction B1. Hereinafter, the above-mentioned directions of the machine body 2 are often simply referred to as the above-mentioned directional terms or derivatives thereof omitting the words "of the machine body 2".

Further, when the protection unit 5 or the interior of the protection unit 5 is described, it is assumed that the fore-and-aft and lateral directions in the interior of the protection unit 5 coincide to the fore-and-aft and lateral directions of the machine body 2, respectively, because the protection unit 5 is mounted on the machine body 2 so as to keep its position relative to the machine body 2 constant. On this assumption, the rightwardly or leftwardly outward direction from the center of the interior of the protection unit 5 in the lateral direction K2 is defined as a "laterally distal" direction, and the direction opposite to the "laterally distal direction" is defined as a "laterally proximal" direction. However, when the inside and outside of the protection unit 5 are described, the terms "interior" and "exterior" may be used in correspondence to the "inside" and "outside" of the protection unit 5. In all the accompanying drawings, identical reference numerals are used for like elements of the invention or elements of like function.

Referring to FIG. 16, the travel device 3 is a crawler travel device, including a first crawler travel unit 3A and a second crawler travel unit 3B. The first crawler travel unit 3A is disposed on one lateral (in this embodiment, left) side of the machine body 2, and the second crawler travel unit 3B is on the other lateral (in this embodiment, right) side of the machine body 2. The travel device 3 supports the machine body 2, thereby enabling the machine body 2 to travel with the travel device 3. Also, the machine body 2 is supported on the travel device 3 swivelably around a vertical axis. A dozer device 7 is attached to a front portion of the travel device 3 so as to extend forward from the travel device 3.

Referring to FIG. 16, the protection unit 5 is mounted laterally eccentrically on the machine body 2 at one lateral (in this embodiment, left) side of the center of the machine body 2. The machine body 2 is provided on a rear portion thereof with a prime mover 9 and a bonnet 8 covering the prime mover 9. The bonnet 8 defines an engine room mainly accommodating the prime mover 9. The bonnet 8 includes a bonnet center member 8a, a rear bonnet member 8b, an upper bonnet member 8c and a side bonnet member 8d. The bonnet center member 8a covers a space forwardly upward and forward from the prime mover 9 so as to shield the engine room from an interior space of the protection unit 5. The rear bonnet member 8b is openably and closably disposed so as to cover a space rearward from the prime mover 9. The upper bonnet member 8c covers an upper rear portion of the prime mover 9. The side bonnet member 8d covers a fuel tank (not shown), which stores fuel for the prime mover 9, and so on disposed on the machine body 2 at the other lateral (in this embodiment, right) side of the center of the machine body 2.

Referring to FIGS. 15 and 16, the working device 4 is provided on the machine body 2 so as to serve as a front-loaded working device disposed forward from the protection unit 5. More specifically, as shown in FIG. 16, the working device 4 is disposed eccentrically at one lateral (in this embodiment, left) side of the center of the protection unit 5 in the lateral direction K2.

Referring to FIG. 15, the working device 4 is supported by a swing bracket 10, and the swing bracket 10 is supported by a support bracket 11. The support bracket 11 is fixed to the machine body 2 and projects forward from the machine body 2. The swing bracket 10 is supported by the support bracket 11 so as to be rotatable around a vertical axis relative to the support bracket 11.

Referring to FIG. 15, the working device 4 includes a boom 12, an arm 13, and a working implement 14, such as a bucket. The boom 12 is pivoted at a basal end portion 12a thereof on an upper portion of the swing bracket 10 via a boom shaft 16 so as to be rotatable relative to the swing bracket 10 around a horizontal axis defined by the boom shaft 16. Accordingly, the boom 12, i.e., the entire working device 4 is vertically swingable.

Referring to FIG. 15, the arm 13 is pivoted at a basal end portion 13a thereof on a tip portion 12b of the boom 12 via an arm shaft 17 parallel to the boom shaft 16 rotatably relative to the boom 12. Accordingly, the arm 13 is swingable in a cloud direction approaching the boom 12 and in a dump direction away from the boom 12. The working implement 14 is pivoted on a tip portion 13b of the arm 13 via a working implement shaft 18 parallel to the arm shaft 17 rotatably relative to the arm 13. Accordingly, the working implement 14 is swingable in the cloud direction approaching the arm 13 and in the dump direction away from the arm 13.

Referring to FIG. 15, the working device 4 includes a boom cylinder 19 for driving the boom 12, an arm cylinder 20 for driving the arm 13, and a working implement cylinder 21 for driving the working implement 14. The boom cylinder 19, the arm cylinder 20 and the working implement cylinder 21 are hydraulic cylinders.

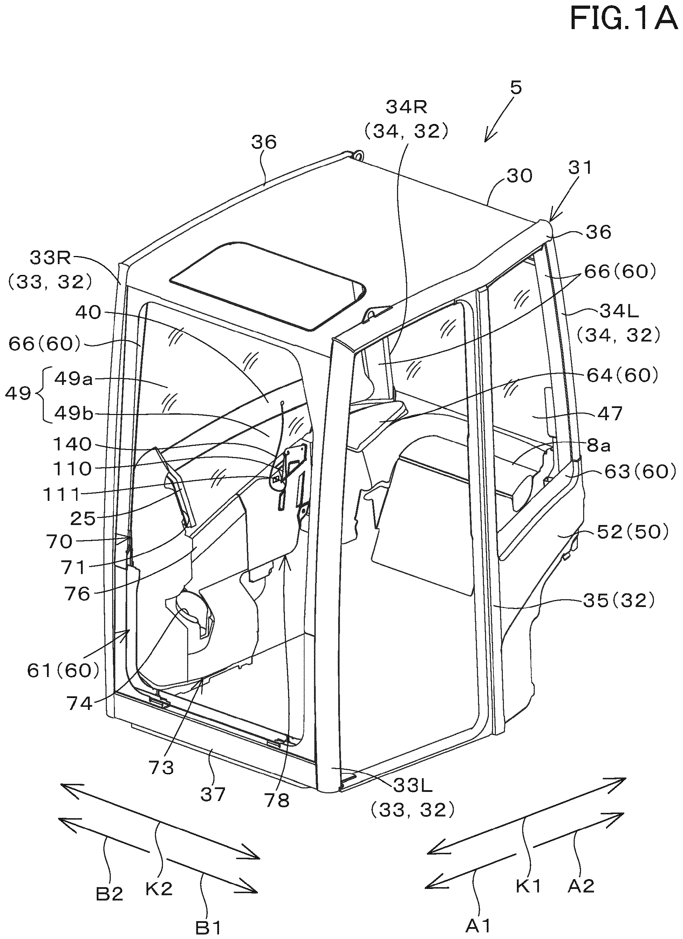

Referring to FIGS. 1A, 1B, 15 and 16, the protection unit 5 includes a roof 30 and a frame structure 31. The roof 30 is disposed above the seat 6. The frame structure 31 supports the roof 30. The roof 30 is a platy member that is rectangular when viewed in plan. The roof 30 covers a space above the seat 6 so as to define an exterior face of a ceiling portion of the protection unit 5.

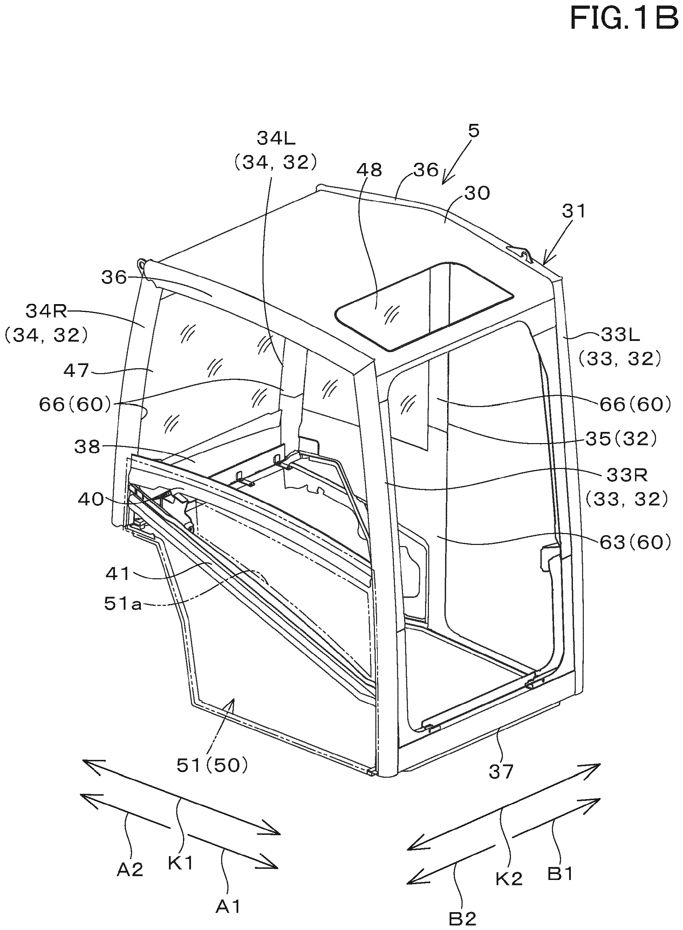

Referring to FIGS. 1A and 1B, the frame structure 31 includes substantially vertically extended pillars 32. The pillars 32 include a pair of front pillars 33, a pair of rear pillars 34, and an intermediate (or center, or quarter) pillar 35. The frame structure 31 further includes substantially horizontally extended connection frames, i.e., one or more support frames 36, a front bottom frame 37 and a rear bottom frame 38, for connecting the pillars 32 to one another.

Referring to FIGS. 1A and 1B, the pair of front pillars 33, i.e., a first front pillar 33L and a second front pillar 33R, are juxtaposed in the lateral direction K2 and are extended upward from the machine body 2 so as to define a front end portion of the protection unit 5. The first front pillar 33L is disposed so as to define a first lateral side (in this embodiment, left) end of the front end portion of the frame structure 31. The second front pillar 33R is disposed so as to define a second lateral side (in this embodiment, right) end of the front end portion of the frame structure 31.

Referring to FIGS. 1Aand 1B, the pair of rear pillars 34, i.e., a first rear pillar 34L and a second rear pillar 34R, are juxtaposed in the lateral direction K2 and are extended upward from the machine body 2 so as to define a rear end portion of the protection unit 5. The first rear pillar 34L is disposed so as to define the first lateral side (in this embodiment, left) end of the rear end portion of the frame structure 31. The second rear pillar 34R is disposed so as to define the second lateral side (in this embodiment, right) end of the rear end portion of the frame structure 31.

Referring to FIGS. 1A and 1B, the intermediate pillar 35 is extended upward from the machine body 2 on the first lateral side (in this embodiment, left) end of the frame structure 31. The intermediate pillar 35 is disposed between the first front pillar 33L and the first rear pillar 34L, i.e., at an intermediate portion of the protection unit 5 in the fore-and-aft direction K1.

The configuration of the pillars 32 is not limited to the above-mentioned configuration including the pair of front pillars 33, the pair of rear pillars 34, and the intermediate pillar 35. Various configurations are conceivable for the pillars 32. For example, the pillars 32 may include only the pair of front pillars 33 and the pair of rear pillars 34 without the intermediate pillar 35.

Referring to FIGS. 1A and 1B, the support frame or frames 36 is/are configured so as to connect tops of the pillars 32 to one another. For example, as illustrated, a pair of support frames 36 are provided so that one support frame 36 connects the top of the first front pillar 33L, the top of the intermediate pillar 35, and the top of the first rear pillar 34L to one another, and the other support frame 36 connects the top of the second front pillar 33R to the top of the second rear pillar 34R. The roof 30 is attached to the support frame or frames 36 so as to be supported entirely from the front end thereof to the rear end thereof by the frame structure 31. For example, as illustrated, a pair of support frames 36 are provided, and the roof 30 is joined at both opposite lateral sides thereof to the respective support frames 36. Various configurations are conceivable if only the support frame 36 connects tops of any pillars 32 to each other and supports the roof 30 at an upper portion thereof.

Referring to FIGS. 1A and 1B, the front bottom frame 37 is interposed between a lower end of the first front pillar 33L and a lower end of the second front pillar 33R so as to define a lower end of the front end portion of the protection unit 5. A front mount member (not shown) is disposed at a lower portion of the front bottom frame 37 so that the front end portion of the protection unit 5 is supported at a bottom portion thereof by the front portion of the machine body 2 via the front mount member.

Referring to FIGS. 1A and 1B, the rear bottom frame 38 is interposed between a lower end of the first rear pillar 34L and a lower end of the second rear pillar 34R so as to define a lower end of the rear end portion of the protection unit 5. The rear bottom frame 38 is higher than the front bottom frame 37. A rear mount member (not shown) is disposed at a lower portion of the rear bottom frame 38 so that the rear end portion of the protection unit 5 is supported at a bottom portion thereof by the rear portion of the machine body 2 defined by an upper portion of the bonnet center member 8a, for example, via the rear mount member.

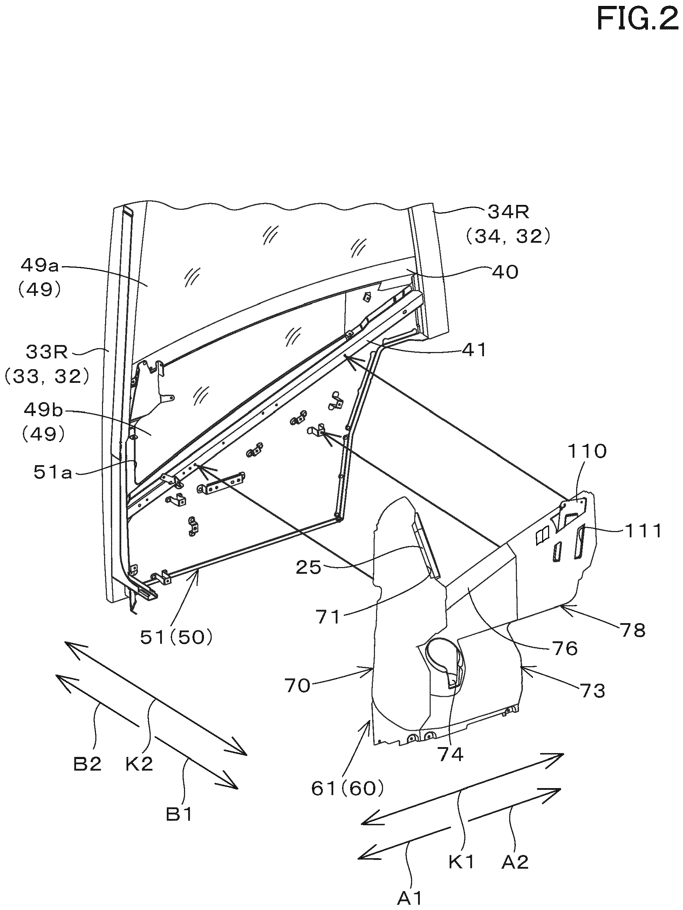

Referring to FIGS. 1B and 2, the frame structure 31 includes a bridge frame 40 and a connection frame 41 disposed at the second lateral side (in this embodiment, right) end portion of the frame structure 31. The bridge frame 40 is extended in the fore-and-aft direction K1, and is joined at a front end thereof to a vertically intermediate portion of the second front pillar 33R, and at a rear end thereof to a lower portion of the second rear pillar 34R. The connection frame 41 is extended rearwardly upward slantwise below the bridge frame 40, and is joined at a front end thereof to a lower portion of the second front pillar 33R below the front end of the bridge frame 40, and at a rear end thereof to the lower portion of the second rear pillar 34R immediately below the rear end of the bridge frame 40.

Referring to FIG. 15, the protection unit 5 includes an openable and closable boarding door 45. In the present embodiment, the boarding door 45 is disposed at the first lateral side (in this embodiment, left) end portion of the protection unit 5 opposite to the bridge frame 40 and the connection frame 41 in the lateral direction K2. Also, the boarding door 45 is disposed between the first front pillar 33L and the intermediate pillar 35 so as to define a front portion of a left end portion of the protection unit 5, so that an outside face of the boarding door 45 defines a front area of a left exterior face of the protection unit 5. The boarding door 45 is pivotally attached to hinges provided on the intermediate pillar 35 so as to be vertically axially rotatable relative to the intermediate pillar 35.

The protection unit 5 includes a front glass 46, a rear glass 47, a quarter (or rear side) glass 48, and a side glass 49. The front glass 46 is disposed between the first and second front pillars 33L and 33R, and is extended downward from a lower front end portion of the roof 30 to an upper portion of the front bottom frame 37 so as to define a front end portion of the protection unit 5, so that an outside face of the front glass 46 defines a front exterior face of the protection unit 5.

Referring to FIGS. 1A and 1B, the rear glass 47 is disposed between the first and second rear pillars 34L and 34R, and is extended downward from a lower rear end portion of the roof 30 to an upper portion of the rear bottom frame 38 so as to define a rear end portion of the protection unit 5, so that an outside face of the rear glass 47 defines a rear exterior face of the protection unit 5.

Referring to FIGS. 1B and 15, the quarter glass 48 is disposed between the intermediate pillar 35 and the first rear pillar 34L, and is extended downward from a left lower end portion of the roof 30 so as to define a rear upper area of the left end face of the protection unit 5, so that an outside face of the quarter glass 48 defines a rear upper area of the left exterior face of the protection unit 5.

Referring to Fig. 1A, the side glass 49, serving as a window member, is disposed between the second front pillar 33R and the second rear pillar 34R, and is extended downward from a lower right end portion of the roof 30 to an upper portion of the connection frame 41 so as to define an upper portion of a right end portion of the protection unit 5, so that an outside face of the side glass 49 defines an upper area of a right exterior face of the protection unit 5. One or more window members constitute the side glass 49. Hereinafter, each window member is referred to as a window member 49. In the illustrated embodiment, an upper side glass 49a and a lower side glass 49b serve as the window members 49. The upper side glass 49a is disposed above the bride frame 40, and the lower glass 49b is disposed between a lower end of the bridge frame 40 and an upper portion of the connection frame 41.

Referring to FIGS. 1A and 1B, the protection unit 5 includes an exterior cover 50 whose outside face defines an exterior face thereof. The exterior cover 50 contains at least one or more portions including front, rear, left and right portions of the protection unit 5 whose outside face each define the exterior face of the protection unit 5. In the present embodiment, the exterior cover 50 includes a first cover 51 disposed between the second front pillar 33R and the second rear pillar 34R, and a second cover 52 disposed between the intermediate pillar 35 and the first rear pillar 34L.

Referring to FIGS. 1B and 2, the first cover 51 is extended downward from the bridge frame 40 between the second front pillar 33R and the second rear pillar 34R. The outside face of the first cover 51 defines a lower area of the right exterior face of the protection unit 5. The first cover 51 is attached and fixed to the second front pillar 33R, the second rear pillar 34R, the bridge frame 40, and the connection frame 41. The first cover 51 is penetrated in the lateral direction K2 so as to form a window opening 51a. The lower side glass 49b is disposed in correspondence to the window opening 51a so as to cover the window opening 51a.

Referring to FIG. 1A, the second cover 52 is disposed between the intermediate pillar 35L and the first rear pillar 34L, and is extended downward from a lower end portion of the quarter glass 48. The outside face of the second cover 52 defines a rear lower area of the left exterior face of the protection 5. The above-mentioned configuration of each external cover 50 is merely one example. Alternatively (or additionally), the external cover (or covers) 50 may be (or include) a cover for covering a space rearward from the rear bottom frame 38. Various configurations are conceivable with regard to the external cover or covers 50.

Referring to FIGS. 1A, 1B, 2 and other figures, the protection unit 5 includes a lining 60 attached to the inside thereof to define an interior face thereof. The lining 60 contains at least one or more portions including front, rear, left and right portions whose inside face each define the interior face of the protection unit 5. In the present embodiment, the lining 60 includes a first lining 61, a second lining (not shown), a third lining 63, a fourth lining 64, a fifth lining serving as an inner roof (not shown), and sixth linings 66 serving as pillar linings are provided so that each of these linings serves as the lining 60.

Referring to FIGS. 1A and 2, the first lining 61 is disposed between the second front pillar 33R and the second rear pillar 34R. The second lining is fixed to the boarding door 45 so as to serve as an interior door trim of the boarding door 45. Referring to FIG. 1B, the third lining 63 is disposed between the intermediate pillar 35 and the first rear pillar 34L so as to define an interior face corresponding to the second cover 52 on the exterior side. Referring to FIG. 1A, the fourth lining 64 is extended leftward from a right end of the bonnet center member 8a to the second rear pillar 34R so as to define a rear interior face of the protection unit 5. The fourth lining 64 is formed with a recess or so on for accommodating a small article. The fifth lining is disposed at a bottom portion of the roof 30 so as to define an interior face (i.e., inner roof) of the roof 30.

The sixth linings 66 define interior faces, i.e., pillar trims, of the respective pillars 32. In the present embodiment, the sixth linings 66 are attached to the intermediate pillar 35, the first rear pillar 34L and the second rear pillar 34R, respectively. Referring to FIG. 1B, the sixth lining 66 on the intermediate pillar 35 is extended upward from a front portion of the third lining 63 and along the interior (i.e., right) side of the intermediate pillar 35. Referring to FIGS. 1A and 1B, the sixth lining 66 on the first rear pillar 34L is extended upward from a rear portion of the third lining 63 and along the interior (i.e., right) side of the first rear pillar 34L. Referring to FIG. 1A, the sixth lining 66 on the second rear pillar 34R is extended upward from a right rear portion of the fourth lining 64 and along the interior (i.e., left) side of the second rear pillar 34R.

The above-mentioned configuration of each lining 60 is merely one example. Various configurations are conceivable for the lining (or members) 60 if only it defines (or they define) at least one part of the interior faces of the protection unit 5. For example, the lining (or members) 60 may be provided to define only one of the laterally opposite (i.e., the first and second lateral side) interior faces of the protection unit 5.

The lining 60 may include a plurality of lining members. More specifically regarding the first lining 61, referring to FIG. 2, a plurality of lining members are attached to the frame structure 31 to constitute the first lining 61. The plurality of lining members constituting the first lining 61 are a front lining member 70, an intermediate lining member 73, an upper lining member 76 and a rear lining member 78. These lining members 70, 73, 76 and 78 are formed separately from one another.

Referring to FIGS. 1A and 2 to 5, the front lining member 70 defines a front portion of the first lining 61 corresponding to a front portion of the first cover 51. The front lining member 70 is extended upward along the second front pillar 33R so that the top of the front lining member 70 is substantially as high as the bridge frame 40. Referring to FIG. 2, the front lining member 70 is attached to the front portion of the first cover 51 and a front portion of the connection frame 41 via attachment stays or so on. The front lining member 70 is formed at an upper portion thereof with a display attachment portion 71. A display device 25 for informing an operator of various matters regarding the working machine 1 is attached to the display attachment portion 71 so that the display device 25 is held by the front lining member 70 so as to face its screen to the seat 6.

Referring to FIGS. 2, 4 and 5, the intermediate lining member 73 defines a fore-and-aft intermediate portion of the first lining 61 corresponding to a fore-and-aft intermediate portion of the first cover 51. The intermediate lining member 73 is extended downward from the connection frame 41, is bent at an intermediate portion thereof to extend in the lateral proximal (in this embodiment, leftward) direction, is formed to have a vertically curved surface, and is extended downward from the curved surface. The intermediate lining member 73 is extended rearward from the front lining member 70 and is attached to the fore-and-aft intermediate portion of the first cover 51 via attachment stays or so on. The intermediate lining member 73 is formed in a front portion thereof with a drink holder 74 for holding a beverage container. The drink holder 74 is formed as an upwardly open recess for holding an outer peripheral portion of a beverage container.

Referring to FIG. 2, the upper lining member 76 is extended upward from a top of the intermediate lining member 73 and is attached to a fore-and-aft intermediate portion of the connection frame 41.

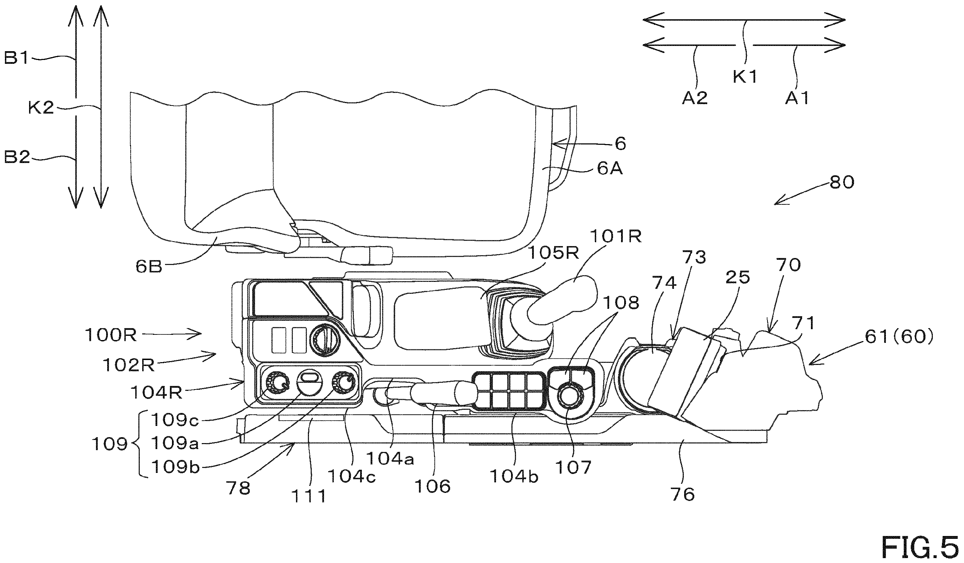

Referring to FIGS. 2 and 5, the rear lining member 78 defines a rear portion of the first lining 61 corresponding to a rear portion of the first cover 51. The rear lining member 78 is extended rearward from an upper portion of the intermediate lining member 73 and the upper lining member 76, and is attached to the rear portion of the first cover 51 and a rear portion of the connection frame 41 via attachment stays or so on.

In the present embodiment, the first lining 61 includes the plurality of lining members as described above. However, the configuration of the first lining 61 or the number of lining members constituting the first lining 61 is not limited to the above-mentioned configuration or number. The only requirement for the first lining 61 is to define at least one part of the interior faces of the protection unit 5. Alternatively, only a single lining member may constitute the first lining 61.

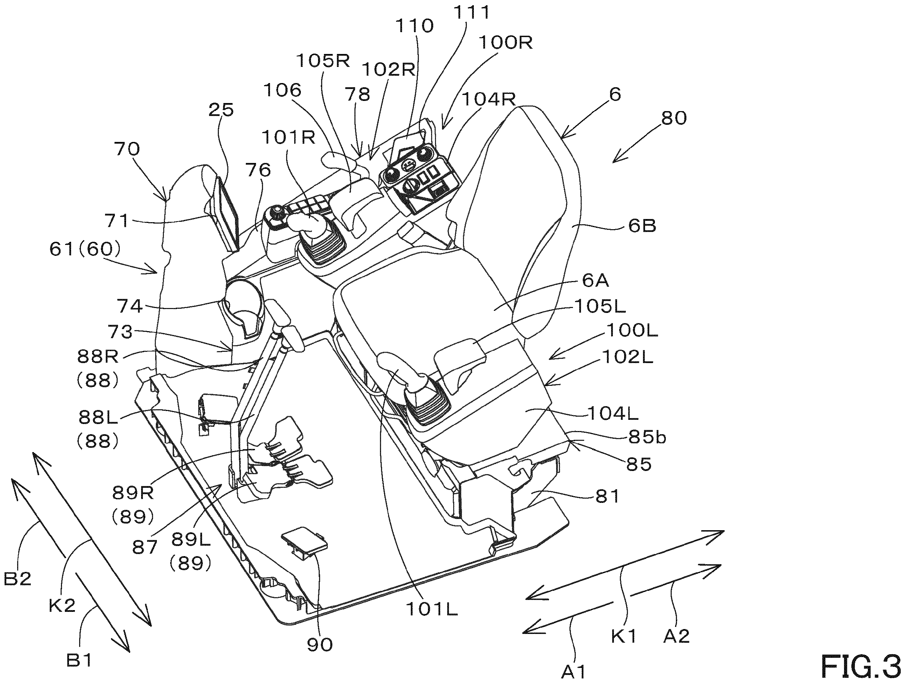

The working machine 1 is equipped with an operation section 80 such as shown in FIGS. 3 to 6 and 15. The operation section 80 is disposed in the interior space defined by the protection unit 5. The operation section 80 includes the operator's seat 6 mounted on the machine body 2.

Referring to FIGS. 3 to 5, the seat 6 includes a seat board portion 6A and a backrest portion 6B. The seat board portion 6A is formed so that when an operator sits on the seat 6, the operator's buttocks and thighs are placed on the seat board portion 6A. The backrest portion 6B is extended upward from a rear portion of the seat board portion 6A so that an operator sitting on the seat 6 can lean at his/her back on the backrest portion 6B.

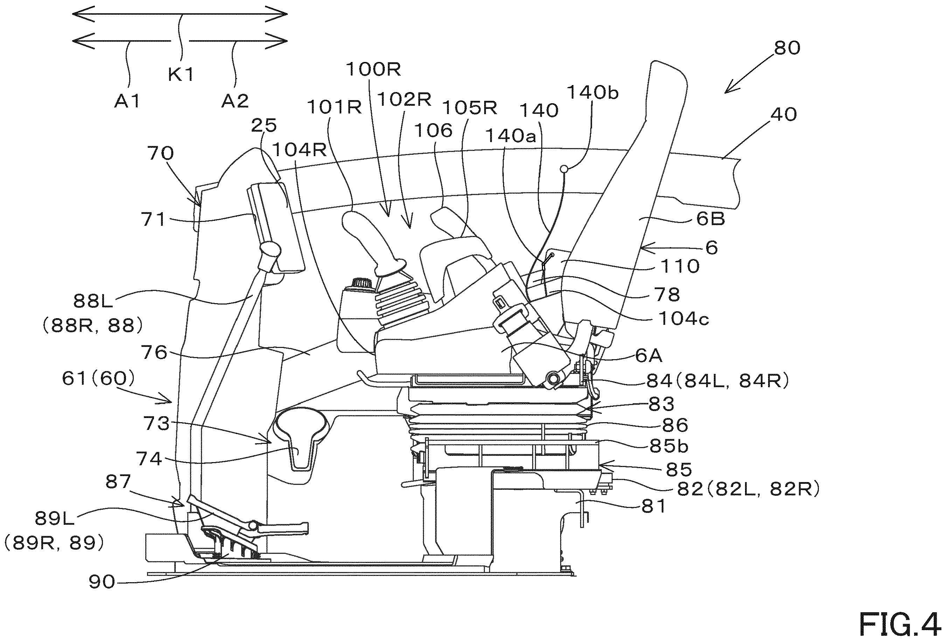

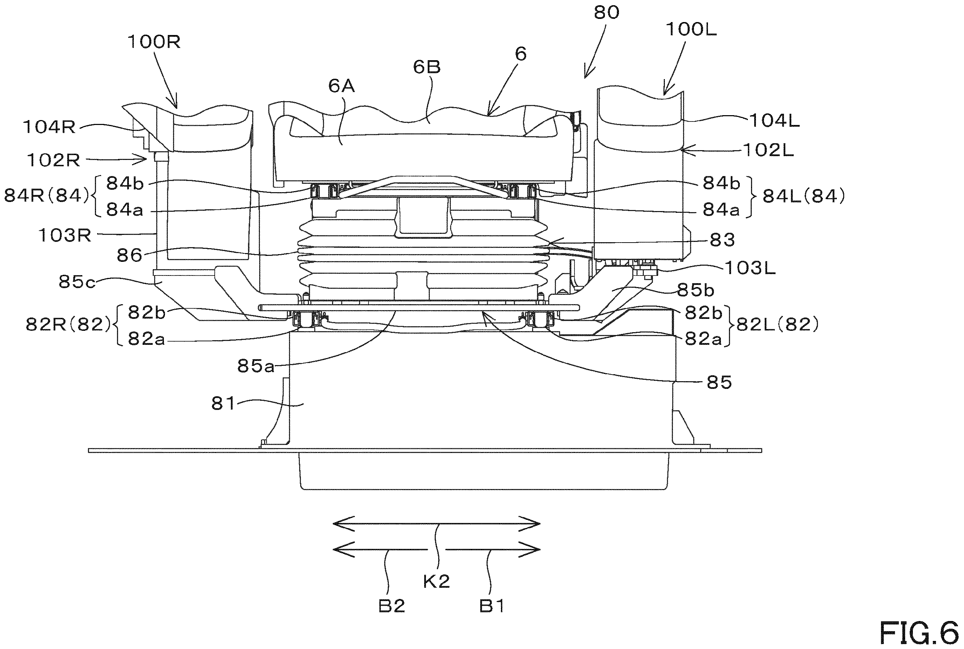

Referring to FIGS. 3, 4 and 6, a support base 81 is disposed under the seat 6. The support base 81 is attached to the machine body 2. Referring to FIGS. 4 and 6, a movable unit 83 is supported on the support base 81 via a first rail assembly 82 so that the fore-and-aft position of the movable unit 83 is adjustable. The first rail assembly 82 includes a left first slide rail 82L and a right first slide rail 82R.

Referring to FIGS. 4 and 6, the movable unit 83 is disposed on an upper portion of the support base 81, and the seat 6 is supported on the movable unit 83 via a second rail assembly 84 so that the fore-and-aft position of the seat 6 is adjustable. The second rail assembly 84 includes a left second slide rail 84L and a right second slide rail 84R. The movable unit 83 includes a slide frame 85 and a suspension 86. The slide frame 85 is mounted on the support base 81 via the first slide rails 82L and 82R, and the suspension 86 is attached to the slide frame 85. The slide frame 85 includes a first attachment portion 85a, a second attachment portion 85b and a third attachment portion 85c. The suspension 86 is attached to the first attachment portion 85a. The second attachment portion 85b is extended leftward from the first attachment portion 85a. The third attachment portion 85c is extended rightward from the first attachment portion 85a.

The seat 6 is mounted on the suspension 86 via the second slide rails 84L and 84R. The suspension 86 supports the seat 6 loaded with an operator sitting on the seat 6 and serves as a buffer for reducing vibration or shock transmitted upward from the ground to the seat 6. The suspension 86 may include a height adjustment mechanism for adjusting the height of the seat 6.

Referring to FIG. 4, the first slide rails 82L and 82R are extended in the fore-and-aft direction K1. Referring to FIG. 6, each of the first slide rails 82L and 82R includes a lower rail 82a and an upper rail 82b. The lower rails 82a are fixed to the support base 81. The upper rails 82b are fitted on the respective lower rails 82a slidably along the lower rails 82a in the fore-and-aft direction K1, and are fixed to the slide frame 85.

Referring to FIG. 6, the second slide rails 84L and 84R are extended in the fore-and-aft direction K1. Each of the second slide rails 84L and 84R includes a lower rail 84a and an upper rail 84b. The lower rails 84a are fixed to an upper portion of the suspension 86. The upper rails 84b are fitted on the respective lower rails 84a slidably along the lower rails 84a in the fore-and-aft direction K1, and are fixed to a lower portion of the seat 6. Therefore, the seat 6 is movable relative to the movable unit 83 in the fore-and-aft direction K1.

Referring to FIG. 3, the operation section 80 is provided with travel operation members 87 and operation pedals 90. The travel operation members 87 include travel operation levers 88 and travel operation pedals 89 for operating the travel device 3. The travel operation levers 88 include a first travel operation lever 88L and a second travel operation lever 88R. The travel operation pedals 89 include a first travel operation pedal 89L and a second travel operation pedal 89R. The first travel operation lever 88L and the first travel operation pedal 89L serve as operation members for operating the first crawler travel unit 3A. The second travel operation lever 88R and the second travel operation pedal 90R serve as operation members for operating the second crawler travel unit 3B. The operation pedal 90 serves as an operation member for operating the swinging action of the swing bracket 10, for example.

Referring to FIG. 3, the operation section 80 is provided with an operation unit 100L (hereinafter referred to as "first operation unit 100L") disposed on the first lateral (in this embodiment, left) side of the seat 6, and an operation unit 100R (hereinafter referred to as "second operation unit 100R") disposed on the second lateral (in this embodiment, right) side of the seat 6. The first operation unit 100L includes a first operation lever 101L and an operation base 102L on which the first operation lever 101L is provided. The first operation lever 101L serves as an operation member for operating a boom control valve for controlling the boom cylinder 10 and an arm control valve for controlling the arm cylinder 20.

Referring to FIG. 6, the first operation base 102L is disposed on one lateral side (in this embodiment, on the first lateral side, or the left side) of the seat 6 and is accommodated in the interior of the protection unit 5. The first operation base 102L includes a first support bracket 103L and a first console box 104L. The first support bracket 103L is attached to the machine body 2 via the second mount portion 85b. The first console box 104L is fixed to the first support bracket 103L so as to be disposed on the left side of the seat 6. An armrest 105L is disposed at a rear portion of the first console box 104L rearward from the first operation lever 101L. An operator sitting on the seat 6 can rest his/her elbow or forearm on the armrest 105L.

Referring to FIGS. 3 to 5, the second operation unit 100R includes a second operation lever 101R, a dozer operation lever 106, and a second operation base 102R on which the second operation lever 101R and the dozer operation lever 106 are provided. The second operation lever 101R is an operation member for operating the working device 4 and so on. More specifically, the second operation lever 101R is operable to operate a working implement control valve for controlling the working implement cylinder 21, and a swivel control valve for controlling a swivel motor for swiveling the machine body 2, for example. The second operation base 102R is disposed on another lateral side (in this embodiment, on the second lateral side, or the right side) of the seat 6 and is accommodated in the interior of the protection unit 5. The second operation base 102R includes a second support bracket 103R and a second console box 104R. The second support bracket 103R is fixed to the machine body 2 via the third attachment portion 85c. The second console box 104R is fixed to the second support bracket 103R so as to be disposed on the right side of the seat 6. In this way, the first operation unit 100L and the second operation unit 100R are attached to the machine body 2 via the second attachment portion 85b and the third attachment portion 85c, respectively, so that their fore-and-aft positions in the protection unit 5 are adjustable according to the positional adjustment of the movable unit 83.

More specifically regarding the second console box 104R, referring to FIG. 5, the second console box 104R includes an intermediate portion 104a, a front portion 104b protecting forward from the intermediate portion 104a, and a rear portion 104c protecting rearward from the intermediate portion 104a. The intermediate portion 104a is defined as an intermediate portion of the second console box 104R in the fore-and-aft direction K1. The front portion 104b projects forward from the intermediate portion 104a. The rear portion 104c projects rearward from the intermediate portion 104a. The intermediate portion 104a is disposed laterally sideward from the seat board portion 6A. The front portion 104b has a front end disposed laterally sideward from a front end of the seat board portion 6A. The rear portion 104c has a front end disposed laterally sideward from the seat board portion 6A, and has a rear end disposed rearward from a rear end of the seat board portion 6A. Referring to FIG. 4, an upper face of the rear portion 104c is disposed below an upper portion of the first lining 61 (more specifically, the rear lining member 78).

Referring to FIGS. 3 to 5, the intermediate portion 104a is provided with an armrest 105R disposed laterally sideward from the seat 6 so that an operator sitting on the seat 6 can rest his/her elbow or forearm on the armrest 105R. More specifically, the armrest 105R is disposed laterally sideward from the seat board portion 6A. The dozer operation lever 106 is disposed opposite to the seat 6 with respect to the armrest 105R, i.e., the first console box 104L (more specifically, the intermediate portion 104a), and is supported by the second support bracket 103R rotatably in the fore-and-aft direction K1.

Referring to FIG. 5, the second operation lever 101R, a jog dial 107, and an operation switch 108 are provided on the front portion 104b. The second operation lever 101R is disposed at a proximal portion of the second operation unit 100R laterally sideward from the front portion of the seat board portion 6A, and forward from the armrest 105R. The second operation lever 101R is provided on the front portion 104b so as to extend forwardly upward slantwise from the front portion 104b.

The jog dial 107 and the operation switch 108 are disposed at a distal portion of the second operation unit 100R laterally sideward from the front portion of the seat board portion 6A. The jog dial 107 is operable to operate the display device 25 disposed forward from the jog dial 107 and the operation switch 108.

Operation members 109 for operating an air conditioning system in the working machine 1 and so on are provided on the rear portion 104c. For example, the operation members 109 include a power switch 109a for turning on and off the power of the air conditioning system, a temperature dial 109b for adjusting the room temperature, and an air flow dial 109c for adjusting the air flow.

Referring to FIGS. 1A, 2 and 3, the working machine 1 includes a storage structure 111 for storing a printed matter 110 such as a manual for operating the working machine 1. The printed matter 110 may include one or more sheets. For example, the printed matter 110 includes one or more vertically elongated rectangular cards. For example, the printed matter 110 includes description of items to be noted by an operator boarding on the working machine 1 before or during operation, e.g., "Read and understand the operator's manual", "On boarding on or off the working vehicle 1, confirm whether the lock lever is turned on to set actuators equipped on the working vehicle 1 into an inoperable state", "Check the surroundings of the working machine 1", "Fasten the seatbelt" and so on.

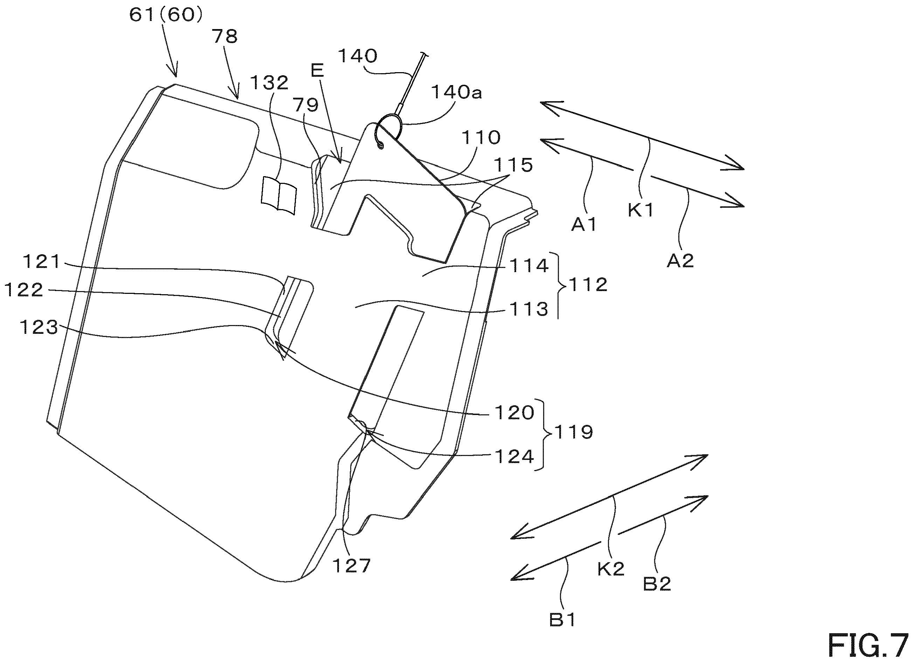

The storage structure 111 is disposed between the protection unit 5 and the second operation base 102R. In the present embodiment, referring to FIGS. 7 to 14 and other figures, of the linings 60, the first lining 61 is disposed laterally sideward from the second operation base 102R, and at least a part of the storage structure 111 is formed integrally with a portion of the first lining 61 facing the second operation base 102R in the protection unit 5. As discussed later, one of lining members constituting the first lining 61 may have the portion of the first lining 61 formed with the storage structure 111.

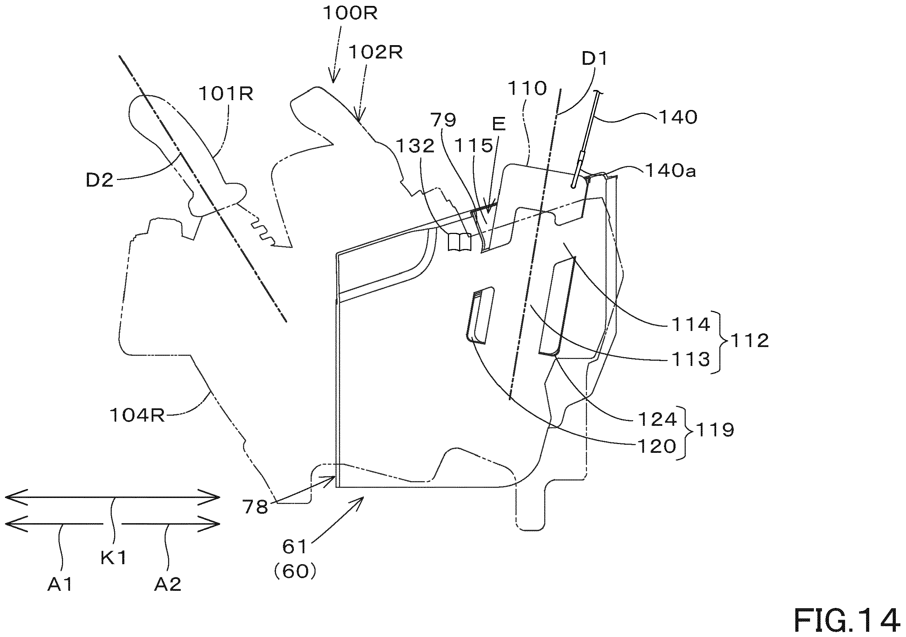

Furthermore, referring to FIG. 14, the storage structure 111 is disposed rearward from the second operation lever 101R. In the present embodiment, the rear lining member 78 of the first lining 61 is formed with the storage structure 111. The storage structure 111 is configured so that, when the printed matter 110 is stored by the storage structure 111, the printed matter 110 is slanted so that a distance of an upper portion of the printed matter 110 rearward from the second operation lever 101R with respect to the machine body 2 is larger than that of a lower portion of the printed matter 110. Also, the storage structure 111 is configured so that, when the printed matter 110 is stored by the storage structure 111, an upper portion of the printed matter 110 is disposed above an upper face of the second operation base 102R. Therefore, the storage structure 111 is positioned so that it is easily visible without obstructing the front viewing of the operator sitting on the seat 6 and the operator's operation of the second operation lever 101R and so on.

Furthermore, referring to FIG. 5, the storage structure 111 is disposed forward from the backrest portion 6B with respect to the machine body 2 so that the printed matter 110 can be stored by the storage structure 111 forward from the backrest portion 6B with respect to the machine body 2. Therefore, the storage structure 111 is positioned appropriately so that an operator sitting on the seat 6 can easily recognize the printed matter 110 stored by the storage structure 111 and pick up the printed matter 110 from the storage structure 111.

Referring to FIG. 1A, the working machine 1 includes a string 140 connected at one end thereof to the printed matter 110 and at the other end thereof to the protection unit 5. Therefore, if an operator mistakenly drops the printed matter 110 out of the storage structure 111, the operator can easily find the printed matter 110 by reeling the printed matter 110 toward himself/herself from the end thereof connected to the protection unit 5, thereby preventing the operator from losing the printed matter 110 in the interior of the protection unit 5.

Referring to FIG. 2, while the outside face of the exterior cover 50 defines the exterior face of the protection unit 5 as mentioned above, an inside face of the exterior cover 50 facing the interior of the protection unit 5 defines a distal (in this embodiment, a laterally distal, i.e., right) end of the storage structure 111 in the interior of the protection unit 5. In this regard, the rear lining member 78 is disposed in correspondence to the first cover 51 serving as the exterior cover 50 disposed to define the exterior face of the protection unit 5, so that the rear lining member 78 is covered at the laterally distal (in this embodiment, right) side thereof with the first cover 51, whereby the storage structure 111 is covered at the right side thereof with the exterior cover 50. Therefore, the storage structure 111 is disposed in the interior of the protection unit 5, and is covered with the exterior cover 50, thereby surely preventing the printed matter 110 from falling to the outside of the protection unit 5.

Referring to FIGS. 7 to 14, a rear portion of the rear lining member 78 is notched with an opening 79 so as to serve as the storage structure 111. The opening 79 is a hole laterally penetrating the rear lining member 78 and formed in a substantially rectangular shape when viewed sideward. By forming the opening 79, the storage structure 111 is formed with a storage space E for storing the printed matter 110 therein. The storage space E is extended from a front lower end thereof to a rear upper end thereof, and is open as the opening 79 at its rear upper end thereof and at its laterally proximal side. The storage space E is defined so that the printed matter 110 held in the storage space E is kept from falling out, and can be easily picked up therefrom. Referring to FIG. 14, the storage space E is extended upward so as to go away rearward from the second operation lever 101R, i.e., rearwardly upward slantwise from the front lower end to the rear upper end thereof. More specifically, a distance between a central axis D2 of the second operation lever 101R and a central axis D1 of the printed matter 110 stored in the storage space E is increased as it goes upward.

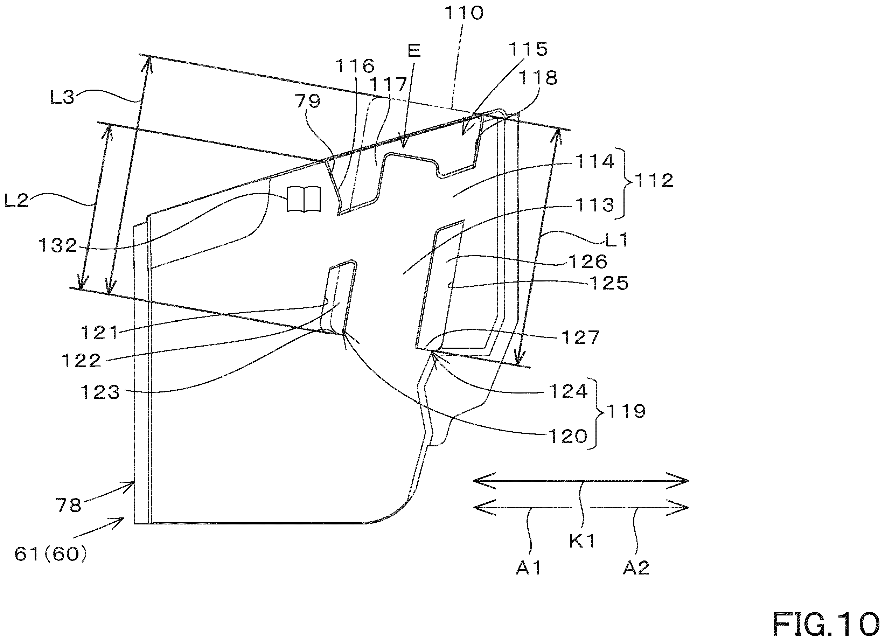

Referring to FIG. 10, the storage space E has front and rear end sides so that a length L1 of the rear end side is larger than a length L2 of the front end side (L1>L2). In the present embodiment, for example, the length L1 of the rear end side of the storage space E is the fifth quarter of the length L2 of the front end side of the storage space E (L1=L2^{∗}5/4). The length L1 of the rear end side of the storage space E is substantially equal to a vertical length L3 of the printed matter 110 (L1=L3). In other words, the length L2 of the rear end side of the storage space E is smaller than the vertical length L3 of the printed matter 110 (L2<L3), so that the front upper portion of the printed matter 110 stored in the storage space E (i.e., the storage structure 111) projects upward from the storage space E. Therefore, the front upper portion of the printed matter 110 stored in the storage space E is disposed above an upper face of the rear portion 104c of the second operation base 102R because the upper face of the rear portion 104c of the second operation base 102R is disposed below an upper end of the rear lining member 78 of the first lining 61.

As understood from the foregoing description, the storage structure 111 is formed integrally with the rear lining member 78. The rear lining member 78 with the storage structure 111 is formed of resin, for example. The storage structure 111 may be formed of any conceivable material if only it is formed integrally with the lining 60, e.g., the rear lining member 78 of the first lining 61.

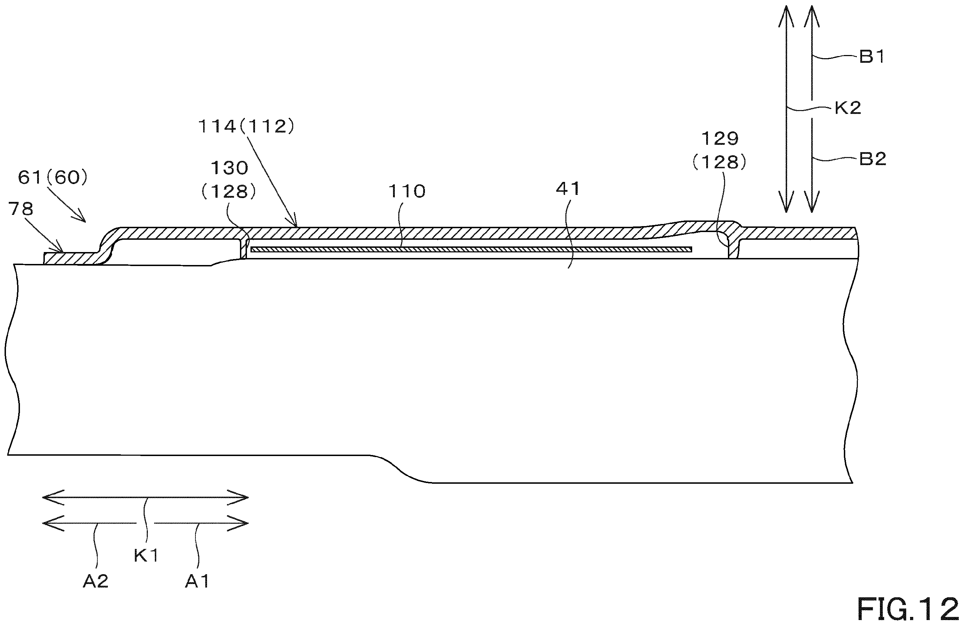

The storage structure 111 includes a closing board 112, a holding tab 115, a retaining portion 119, and connection walls 128. Referring to FIGS. 7 to 11, the closing board 112 defines a laterally proximal (in this embodiment, left) end of the storage space E. Referring to FIG. 12, a laterally proximal (i.e., left) side face of the closing board 112 is substantially flush with a left face of the rear lining member 78, and a laterally distal (i.e., right) side face of the closing board 112 faces a left surface of the printed matter 110 stored in the storage space E.

The closing board 112 includes an axial portion 113 and a traversal portion 114 intersecting the axial portion 113. The axial portion 113 is extended upward, more specifically, rearwardly upward, from a fore-and-aft central portion of a lower edge of the opening 79. The traversal portion 114 is extended rearward from a vertically central portion of a front edge of the opening 79 so as to intersect the axial portion 113, and to reach a vertically central portion of a rear edge of the opening 79.

Referring to FIGS. 7 to 11, the holding tab 115 and the retaining portion 119 define a laterally distal (i.e., right) end of the storage space E. The holding tab 115 and the retaining portion 119 are positioned in correspondence to the closing board 112 defining the laterally proximal end of the storage space E, so that, in at least a side view (perpendicular to the surface of the printed matter 110), they do not overlap the closing board 112.

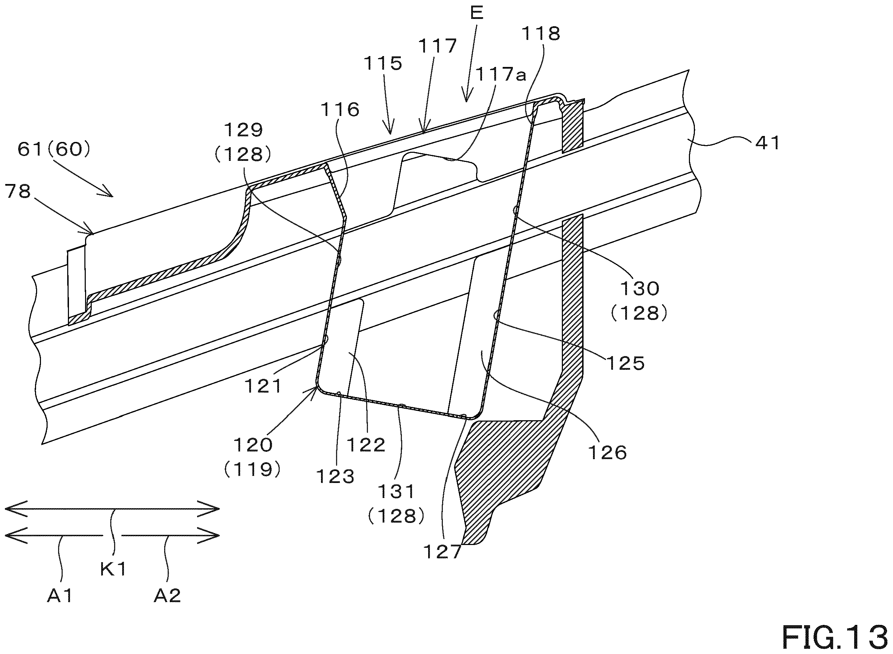

Referring to FIGS. 7 to 11, the holding tab 115 is spaced rightward from the closing board 112 by the lateral width of the storage space E and is offset upward from the traversal portion 114 so as to face an upper area of the right surface of the printed matter 110 in the storage space E. Referring to FIG. 13, the holding tab 115 includes a first wall 116, a second wall 117 and a third wall 118.

The first wall 116 is extended in the laterally distal direction (i.e., rightward) from an upper portion of the front edge of the opening 79 so as to face an upper portion of a front end of the printed matter 110. Referring to FIG. 13, the first wall 116 is slanted rearwardly downward from an upper edge of the rear lining member 78 and is bent at an intermediate portion thereof to extend forwardly downward. The second wall 117 is extended rearward from a laterally distal (i.e., right) end of the first wall 116 so as to face the right surface of the printed matter 110. The second wall 117 is notched upward from its fore-and-aft central portion so as to form a notch 117a corresponding to the axial portion 113 defining the laterally proximal end of the storage space E. The third wall 118 is extended in the laterally proximal direction (i.e., leftward) from a rear end of the second wall 117 and reaches an upper portion of a rear edge of the opening 79 so as to face an upper portion of a rear end of the printed matter 110. The third wall 118 is slanted forwardly downward from the upper edge of the rear lining member 78. Therefore, the first wall 116, the second wall 117 and the third wall 118 are formed to define a substantially gate shape when viewed in plan such as to hold the upper portion of the printed matter 110. Referring to FIG. 13, while the third wall 118 is slanted rearwardly upward, the first wall 116 is bent so that the upper portion of the first wall 116 above the bent portion is slanted forwardly upward, thereby expanding an upper portion (an inlet portion) of the storage space E as it goes upward.

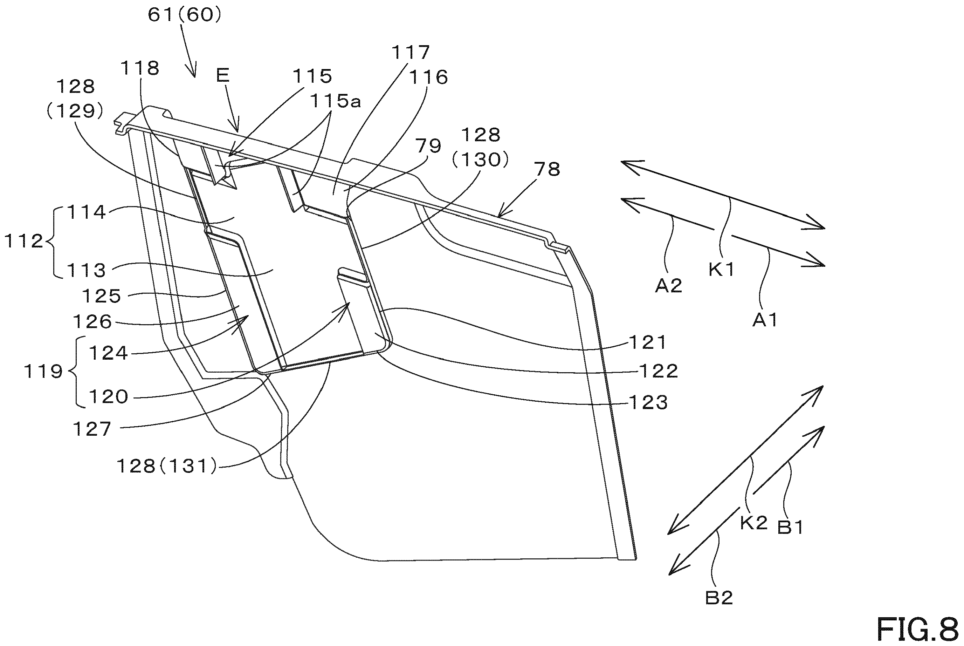

Referring to FIG. 8, the holding tab 115 is formed on the laterally distal (i.e., right) side thereof with a rib 115a for reinforcing the holding tab 115. In the present embodiment, the rib 115a is formed along front and rear edges of the notch 117a defined by the second wall 117. The rib 115a is extended rightward from the notch 117a of the second wall 117 so as to reach the upper side edge of the rear lining member 78.

Referring to FIGS. 13, the retaining portion 119 defines a lower area of the laterally distal (i.e., right) end of the storage space E. The retaining portion 119 is spaced rightward from the closing board 112 by the lateral width of the storage space E and is offset downward from the traversal portion 114 so as to face a lower area of the right surface of the printed matter 110 in the storage space E. The retaining portion 119 is vertically spaced from the holding tab 115 by almost the vertical width of the traversal portion 114. In the present embodiment, the retaining portion 119 includes a first retaining tab 120 disposed at a front portion of the storage structure 111, and a second retaining tab 124 positioned at a rear portion of the storage structure 111.

Referring to FIG. 13, the first retaining tab 120 includes a fourth wall 121, a fifth wall 122, and a sixth wall 123. The fourth wall 121 is extended in the laterally distal direction (i.e., rightward) from a lower portion of the front edge of the opening 79 so as to face a lower portion of the front end of the printed matter 110 in the storage space E. The fourth wall 121 is slanted forwardly downward. The fifth wall 122 is extended rearward from a laterally distal (i.e., right) end of the fourth wall 121 so as to face a front part of the lower area of the right surface of the printed matter 110 in the storage space E. The sixth wall 123 is extended in the laterally distal direction (i.e., rightward) from the front portion of the lower edge of the opening 79, and is joined at a front end thereof to a lower end of the fourth wall 121, and at a right end thereof to a lower end of the fifth wall 122. The sixth wall 123 is slanted rearwardly downward from the lower end of the fourth wall 121 so that a front portion of the lower end of the printed matter 110 in the storage space E is placed on the sixth wall 123. Therefore, the fourth wall 121, the fifth wall 122, and the sixth wall 123 are arranged in a substantially reversed L-like shape when viewed in plan so as to hold the front lower portion of the printed matter 110.

Referring to FIG. 13, the second retaining tab 120 includes a seventh wall 125, an eighth wall 126 and a ninth wall 127. The seventh wall 125 is extended in the laterally distal direction (i.e., rightward) from a lower portion of the rear edge of the opening 79 so as to face a lower portion of the rear end of the printed matter 110. The seventh wall 125 is slanted forwardly downward. The eighth wall 126 is extended forward from a laterally distal (i.e., right) end of the seventh wall 125 so as to face a rear part of the lower area of the right surface of the printed matter 110 in the storage space E. The ninth wall 127 is extended in the laterally distal direction (i.e., rightward) from the rear portion of the lower edge of the opening 79, and is joined at a rear end thereof to a lower end of the seventh wall 125, and at a right end thereof to a lower end of the eighth wall 126. The ninth wall 127 is slanted forwardly upward from the lower end of the seventh wall 125 so that a rear portion of the lower end of the printed matter 110 in the storage space E is placed on the ninth wall 127. Therefore, the seventh wall 125, the eighth wall 126, and the ninth wall 127 are arranged in a substantially L-like shape when viewed in plan so as to hold the rear lower portion of the printed matter 110.

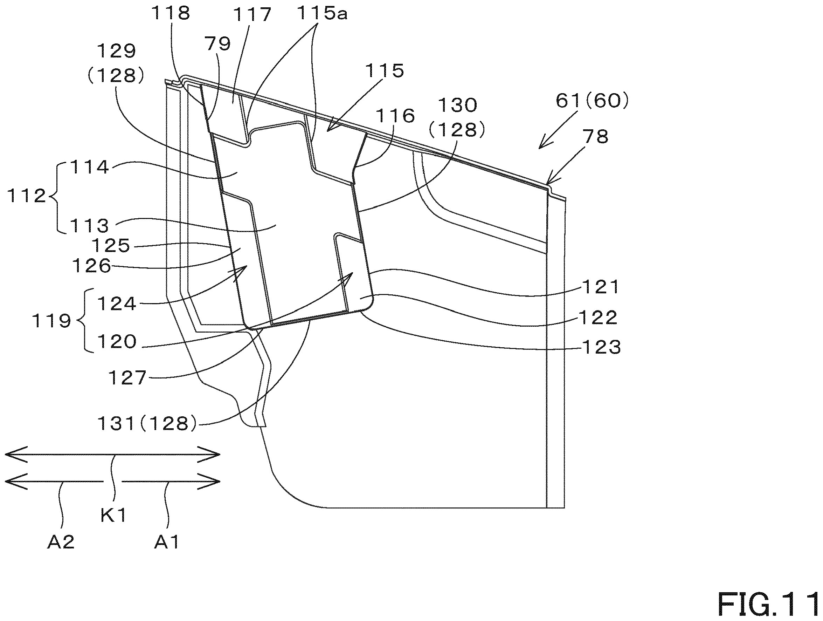

The connection walls 128 connect the holding tab 115 to the retaining portion 119 so as to hold a vertically central portion of the printed matter 110 in the storage space E, and connect the first and second retaining tabs 120 and 124 to each other so as to hold a fore-and-aft central portion of the lower end of the printed matter 110 in the storage space E. Referring to FIGS. 11 and 13, in the present embodiment, the connection walls 128 include a first connection wall 129, a second connection wall 130 and a third connection wall 131. The first connection wall 129 is extended in the laterally distal direction (i.e., rightward) from a front end of the traversal portion 114 so as to connect a lower end of the first wall 116 to an upper end of the fourth wall 121. The first connection wall 129 is slanted forwardly downward. The second connection wall 130 is extended in the laterally distal direction (i.e., rightward) from a rear end of the traversal portion 114 so as to connect a lower end of the third wall 118 to an upper end of the seventh wall 125.

Referring to FIGS. 11 and 13, the second connection wall 130 is slanted forwardly downward so as to oppose the first connection wall 129 in the fore-and-aft direction K1. Therefore, the first and second connection walls 129 and 130 hold the vertically central portion of the printed matter 110 in the storage space E. The third connection wall 131 is extended in the laterally distal direction (i.e., rightward) from the central portion of the lower edge of the opening 79 so as to connect a rear end of the sixth wall 123 of the first retaining tab 120 to a front end of the ninth wall 127 of the second retaining tab 124.

Referring to FIGS. 11 and 13, the third connection wall 131 (which may be referred to as the "bottom wall") is slanted rearwardly downward so that a lower central portion of the printed matter 110 in the storage space E is placed on the third connection wall 131. More specifically, the sixth wall 123 of the first retaining tab 120, the third connection wall 131, and the ninth wall 127 of the second retaining tab 124 are continuously extended to define the rearwardly downward slanted closed lower end of the storage space E so that the lower end of the printed matter 110 in the storage space E is placed on the closed lower end.

Positional relations of the connection frame 41 to the holding tab 115 and the retaining portion 119 will now be described. With regard to the relation between the storage structure 111 and the connection frame 41, referring to FIGS. 2 and 13, the storage structure 111 vertically overlaps the connection frame 41 (when viewed horizontally) and is disposed below the window member 49 on the same lateral side (i.e., right side) of the protection unit 5 with the storage structure 111. More specifically, the storage structure 111 is disposed below the lower side glass 49b disposed at the upper portion of the connection frame 41.

Referring to FIG. 13, the holding tab 115 and the retaining portion 119 are vertically spaced from each other. The connection frame 41 is passed through the space between the holding tab 115 and the retaining portion 119. More specifically, the holding tab 115 corresponds to an upper face of the connection frame 41 so that a lower end of the holding tab 115 substantially coincides to the upper face of the connection frame 41. A lower end of the second wall 117 is slanted forwardly downward along the upper face of the connection frame 41. A laterally proximal (i.e., left) side face of the second wall 117 is substantially flush with a left face of the connection frame 41.

On the other hand, the retaining portion 119 corresponds to a lower face of the connection frame 41 so that an upper end of the retaining portion 119 substantially coincides to the lower end of the connection frame 41. More specifically, an upper end of the fifth wall 122 of the first retaining tab 120 is slanted forwardly downward along the lower face of the connection frame 41, and an upper end of the eighth wall 126 of the second retaining tab 124 is also slanted forwardly downward along the lower face of the connection frame 41. Laterally proximal (i.e., left) side faces of the fifth and eighth walls 122 and 126 are substantially flush with the left face of the connection frame 41. In other words, the laterally distal (i.e., right) end of the storage space E is defined by the laterally proximal (i.e., left) side face of the connection frame 41 in cooperation with the second wall 117 of the retaining tab 115, the fifth wall 122 of the first retaining tab 120 and the eighth wall 126 of the second retaining tab 124. Therefore, the left surface of the connection frame 41 and the second, fifth and eighth walls 117, 122 and 126 face the right surface of the printed matter 110 so as to prevent the printed matter 110 from falling rightward.

Referring to FIGS. 1A, 4 and other figures, the string 140 is a rope, a wire or so on that connects the printed matter 110 to the protection unit 5. In the present embodiment, the string 140 is made of high density polyethylene or so on, for example. However, the material of the string 140 is not limited to the high density polyethylene. Any material may be formed into the string 140 if only the material has a required flexibility. The minimum required length of the string 140 is set so as to enable the printed matter 110 connected to the protection unit 5 to be stored in the storage structure 111, and so as to enable an operator sitting on the seat 6 to pick up the printed matter 110 from the storage structure 111 and understand the description in the printed matter 110.

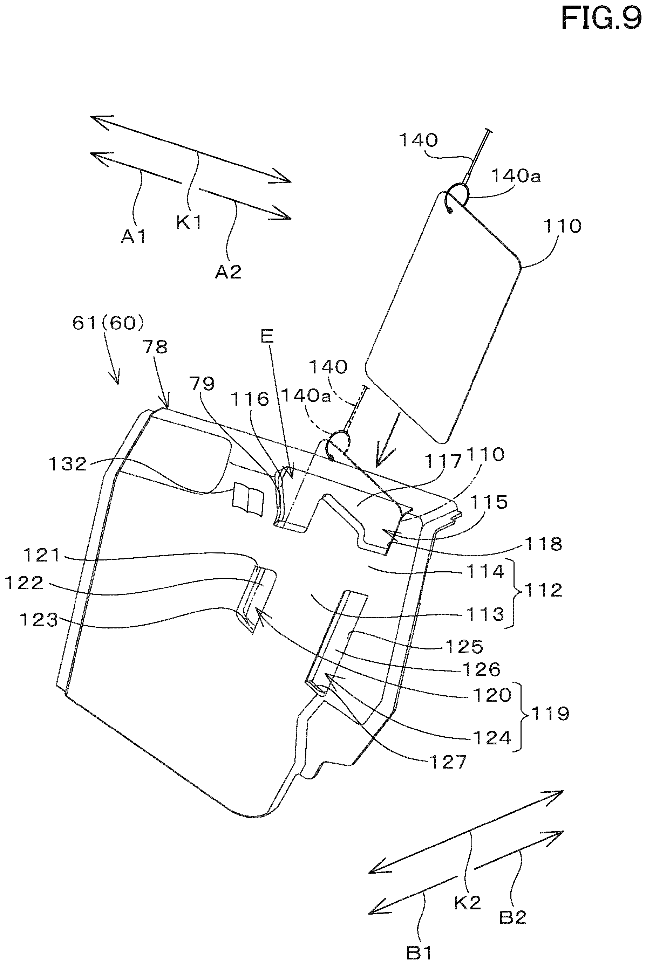

Referring to FIGS. 7, 9 and other figures, one end (hereinafter referred to as a "first end") of the string 140 is formed in a ring-like shape, or is provided with a first joint member 140a formed in a ring-like shape or another shape. The remaining end (hereinafter referred to as a "second end") of the string 140 is attached to the frame structure 31 via a second joint member 140b, such as a screw or a rivet. The printed matter 110 is provided at an edge portion thereof with a hole, and the first joint member 140a is passed at a portion thereof through the hole so as to be attached to the printed matter 110, thereby connecting the first end of the string 140 to the printed matter 110. In the present embodiment, an upper one side corner portion of the printed matter 110 is provided with the hole.

Referring to FIG. 4, the second joint member 140b is fixedly attached to a portion of the frame structure 31 above the storage structure 111. More specifically, the second joint member 140b is attached to a fore-and-aft intermediate portion of the bridge frame 40 so as to be disposed rearward from the second operation lever 101R and forward from the backrest portion 6B. In the state where the printed matter 110 is stored by the storage structure 111 formed on the rear lining member 78, a portion of the string 140 closer to the second end thereof hangs down from the bridge frame 40, an intermediate portion of the string 140 is disposed between the second operation base 102R and the first lining 61 serving as the lining 60, and a portion of the string 140 closer to the first end thereof extends from the intermediate portion thereof to the printed matter 110 stored by the storage structure 111. Therefore, the string 140 rather bypasses the second operation base 102R than extends across it, thereby being prevented from interfering with the operation members, e.g., the second operation lever 101R, the armrest 105R, the dozer operation lever 106, the jog lever 107, the operation switch 109a, the power switch 109a, the temperature dial 109b, the air flow dial 109c and so on, which are provided on the second operation base 102R to operate the working machine 1.

Since the string 140 of the storage structure 111 is joined at the second end thereof to the bridge frame 40, the positional relation among the storage structure 111, the printed matter 110 stored by the storage structure 111 and the string 140 is constant even if the position of the second operation devices 100R relative to the machine body 2 is adjusted by using the first slide rail assembly 82 or the position of the seat 6 relative to the machine body 2 and the second operation base 102R is adjusted by using the second slide rail assembly 84. Therefore, during the positional adjustment of the second operation unit 100R or the seat 6, the string 140 is prevented from interfering with any of the operation members, e.g., the second operation lever 101R, the armrest 105R, the dozer lever 106, the jog dial 107, the operation switch 108, the power switch 109a, the temperature dial 109b, the air flow dial 109c or so on, so as to induce wrong operation of the working machine 1 or to hinder the positional adjustment of the second operation unit 100R or the seat 6.

Referring to FIGS. 7, 9 and 10, a mark 132 is provided on a portion of the rear lining member 78 of the first lining 61 close to the storage structure 111 so as to indicate the storage structure 111 as a portion for storing the printed matter 110. In this embodiment, irregularity formed as an image of the printed matter 110, e.g., a book-like drawn pattern, is attached on the rear lining member 78 to serve as the mark 132. The image of the mark 132 should not be considered as limitative to the book-like drawn pattern. For example, letters such as "MANUAL" may serve as the mark 132. The image as the mark 132 may be changed appropriately to correspond to the kind or so on of the printed matter 110.

Procedures and state variation for taking the printed matter 110 into and out of the storage space E defined by the storage structure 111 will now be described. To store the printed matter 110 in the storage space E, an operator must insert the printed matter 110 into the storage space E via its upper inlet portion. The inserted printed matter 110 is guided downward by the first, second and third walls 116, 117 and 118 and the axial portion 113. The printed matter 110 having been guided by the walls 116, 117 and 118 and portion 113 is further guided downward by the first and second connection walls 129 and 130, the traversal portion 114 and the connection frame 41. The printed matter 110 having been guided by the walls 129 and 130, portion 114 and member 41 is further guided to the bottom portion of the storage space E by the fourth, fifth, seventh and eighth walls 121, 122, 125 and 126 so that the lower end of the printed matter 110 is brought into contact with the sixth wall 123, the third connection wall 131 and the ninth wall 127.

To take the printed matter 110 out of the storage space E, an operator must draw up the printed matter 110 stored in the storage space E. When the printed matter 110 is drawn upward, the drawn printed matter 110 is supported by the fifth wall 122, the eighth wall 126, the closing board 112 and the connection frame 41, while the printed matter 110 is guided rearwardly upward at the front end thereof along the fourth wall 121, the first connection wall 129 and a lower portion of the first wall 116, and at the rear end thereof along the seventh wall 125 and the second connection wall 130. By drawing the printed matter 110 further upward, the operator can easily pick up the printed matter 110 out of the storage space E because the upper portion of the first wall 116 is slanted forwardly upward so as to expand the upper inlet portion of the storage space E as it goes upward.

In the above-mentioned embodiment, the storage structure 111 may be formed integrally with the first lining 61 disposed on the second lateral (i.e., right) side portion of the protection unit 5 so as to be defined as a part of the first lining 61. However, the storage structure 111 may be formed integrally with any lining 60 so as to be defined as a part of the lining 60. For example, the storage structure 111 may be formed integrally with the third lining 63 disposed on the first lateral (i.e., left) side portion of the protection unit 5. Alternatively, the storage structure 111 may be formed of a member separated from any lining 60 so as to be disposed between any lining 60 and the second operation base 102R.

As described above, the working machine 1 comprises the machine body 2, the operator's seat 6 mounted on the machine body 2, the second operation base 102R disposed on the lateral side of the operator's seat 6, the protection unit 5 accommodating the operator's seat 5 and the second operation base 102R in the interior thereof, and the storage structure 111 for storing the printed matter 110. The storage structure 111 is provided on the face of the protection unit 5 facing to the second operation base 102R, on the face of the second operation base 102R facing to the protection unit 5, or between the protection unit 5 and the second operation base 102R. Therefore, the printed matter 110 such as a manual can be disposed so that an operator can easily find the printed matter 110, and the printed matter 110 does not disturb the operator's operation of the working machine 1.

The working machine 1 comprises the working device 4 and the second operation lever 101R disposed on the second operation base 102R to operate the working device 4. The storage structure 111 is disposed rearward from the second operation lever 101R with respect to the machine body 2. Therefore, when the second operation lever 101R is operated, the second operation lever 101R is prevented from interfering with the printed matter 110 stored by the storage structure 111, and the printed matter 110 is prevented from obstructing an operator operating the second operation lever 101R.

The storage structure 111 is configured so that, when the printed matter 110 is stored by the storage structure 111, the printed matter 110 is slanted so that a distance of an upper portion of the printed matter 110 rearward from the second operation lever 101R with respect to the machine body 2 is larger than that of a lower portion of the printed matter 110. Therefore, the printed matter 110 can be taken into and out of the storage structure without being obstructed by the second operation lever 101R. Also, the operator can easily find the printed matter 110 without being obstructed by the second operation lever 101R.

The storage structure 111 is configured so that, when the printed matter 110 is stored by the storage structure 111, the upper portion of the printed matter 110 is disposed above the upper face of the second operation base 102R. Therefore, the operator can easily find the upper portion of the printed matter 110 above the upper face of the second operation base 102R.

The operator's seat 6 includes the seat board portion 6A and the backrest portion 6B. The storage structure 111 is configured so that, when the printed matter 110 is stored by the storage structure 111, the printed matter 110 is disposed rearward from the backrest portion 6B with respect to the machine body 2. Therefore, the operator sitting on the seat 6 can easily find the printed matter 110 and can easily take the printed matter 110 into and out of the storage structure 111.

The working machine 1 comprises the string 140 connecting the printed matter 110 to the protection unit 5. The string 140 is joined at one end thereof to the printed matter 110, and at the other end thereof to the protection unit 5. Therefore, even if the operator mistakenly drops the printed matter 110 from the storage structure 111, the operator can find the printed matter 110 by reeling the string 140 from the second end thereof. Therefore, the operator is prevented from losing the printed matter 110 in the interior of the protection unit 5.

The working machine 1 comprises the lining 60 attached to the interior portion of the protection unit 5. At least a part of the storage structure 111 is formed integrally with the lining 60 so as to be defined as a part of the lining 60. Therefore, processes for assembling and attaching the storage structure 111 can be omitted so as to achieve economic storage of the printed matter 110.

The protection unit 5 comprises the frame structure 31 and the exterior cover 50. The frame structure 31 includes the plurality of pillars 32. The exterior cover 50 is attached to the frame structure 31 so as to define the exterior portion of the protection unit 5. The inside face of the exterior cover 50 facing the interior of the protection unit 5 is configured to define the distal end of the storage structure 111 in the interior of the protection unit 5. Therefore, the exterior cover 50 prevents the printed matter 110 stored by the storage structure 111 from falling to the exterior of the protection unit 5.

The protection unit 5 includes the window member 49 on the same side thereof with the protection structure 111. The storage structure 111 is disposed below the window member 49. Therefore, the printed matter 110 stored by the storage structure 111 is prevented from overlapping the window member 49 to disturb the operator's sight through the window member 49.

## Claims

1. A working machine (1) comprising:
a machine body (2);
an operator's seat (6) mounted on the machine body (2);
an operation base (102R) disposed on a lateral side of the operator's seat (6);
a protection unit (5) accommodating the operator's seat (6) including a seat board portion (6A) and a backrest portion (6B), and the operation base (102R);
a printed matter (110); and a storage structure (111) configured to store printed matter (110),and provided between the protection unit (5) and the operation base (102R), and
an operation lever (101R) disposed on the operation base (102R) to operate a working device (4) provided on the machine body (2),
the working machine **characterized in that** it further comprises:
a string (140) of flexible material connecting between the printed matter (110) and the protection unit (5),
wherein the storage structure (111) is disposed rearward from the operation lever (101R), and configured to allow the printed matter (110) stored therein to position the printed matter (110) forward from the backrest portion (6B) with respect to the machine body (2),
wherein the storage structure (111) is configured to allow the printed matter (110) stored therein to be slanted so that an upper portion of the printed matter (110) is positioned rearward than a lower portion thereof, and to allow the printed matter (110) stored therein to position an upper portion of the printed matter (110) above an upper face of the operation base (102R), and
wherein the string (140) has one end connected to the printed matter (110) and the other end connected to a position of the protection unit (5) above the storage structure (111).

2. The working machine according to claim 1, comprising:
an armrest (105R) disposed on the operation base (102R) and rearward from the operation lever (101R) with respect to the machine body (2); and
a dozer operation lever (106) disposed opposite to the seat (6) with respect to the armrest (105R) and supported rotatably in the fore-and-aft direction (K1);
wherein the storage structure (111) is disposed rearward from the operation lever (101R), the armrest (105R) and the dozer operation lever (106) with respect to the machine body (2).

3. The working machine according to claim 1 or 2, comprising:
a lining (60) attached to the protection unit (5),
wherein at least a part of the storage structure (111) is formed integrally with the lining (60).

4. The working machine according to any one of claims 1 to 3,
wherein the protection unit (5) comprises:
a frame structure (31) including a plurality of pillars (32); and
an exterior cover (50) attached to the frame structure (31),
wherein an inner face of the storage structure (111) facing inside the protection unit (5) is defined by the exterior cover (50).

5. The working machine according to any one of claims 1 to 4,
wherein the protection unit (5) includes a bridge frame (40) extending in a fore-and-aft direction (K1) of the machine body (2), and a window member (49) having an upper side glass (49a) disposed above the bride frame (40) and a lower side glass (49b) disposed below the bride frame (40), the bridge frame (40) and window member (49) being provided on the face thereof facing to the operation base (102R), on which the storage structure (111) is provided, and
wherein the storage structure (111) is disposed below the lower side glass (49b) of the window member (49), and
wherein the other end of the string (140) is connected to the bridge frame (40).

6. The working machine according to any one of claims 1 to 5,
wherein the storage structure (111) includes a bottom wall (131) to support a lower central portion of the printed matter (110), the bottom wall (131) being slanted rearwardly downward with respect to the machine body (2).

7. The working machine according to any one of claims 1 to 6, comprising:
a lining (60) attached to the protection unit (5), the lining (60) containing a rear lining member (78) which includes a closing board (112) and a holding tab (115) opposed each other in a width direction of the machine body (2) so as to define a storage space (E) of the storage structure (111) in between for storing the printed matter (110).

8. The working machine according to any one of claims 1 to 7, comprising:
a lining (60) attached to the protection unit (5), the lining (60) containing a rear lining member (78) which is integrally formed to define a storage space (E) of the storage structure (111) for storing the printed matter (110).

## Patentansprüche

1. Arbeitsmaschine (1), umfassend:
einen Maschinenkörper (2);
einen Fahrersitz (6), der auf dem Maschinenkörper (2) montiert ist;
eine Bedienkonsole (102R), die an einer seitlichen Seite des Fahrersitzes (6) angeordnet ist;
eine Schutzeinheit (5), in der der Fahrersitz (6), der einen Sitzschalenteil (6A) und einen Rückenlehnenteil (6B) aufweist, und die Bedienkonsole (102R) untergebracht sind;
eine Drucksache (110); und
eine Aufbewahrungsstruktur (111), die dazu konfiguriert ist, die Drucksache (110) aufzubewahren, und zwischen der Schutzeinheit (5) und der Bedienkonsole (102R) vorgesehen ist, und
einen Bedienhebel (101R), der auf der Bedienkonsole (102R) angeordnet ist, um eine Arbeitseinrichtung (4) zu betätigen, die an dem Maschinenkörper (2) vorgesehen ist,
wobei die Arbeitsmaschine **dadurch gekennzeichnet ist, dass** sie ferner umfasst:
ein Seil (140) aus flexiblem Material, das zwischen der Drucksache (110) und der Schutzeinheit (5) eine Verbindung herstellt,
wobei die Aufbewahrungsstruktur (111) hinter dem Bedienhebel (101R) angeordnet und dazu konfiguriert ist, es der darin aufbewahrten Drucksache (110) zu ermöglichen, die Drucksache (110) bezogen auf den Maschinenkörper (2) vor dem Rückenlehnenteil (6B) zu positionieren,
wobei die Aufbewahrungsstruktur (111) dazu konfiguriert ist, es der darin aufbewahrten Drucksache (110) zu ermöglichen, so geneigt zu werden, dass ein oberer Teil der Drucksache (110) weiter hinten als deren unterer Teil positioniert ist, und es der darin aufbewahrten Drucksache (110) zu ermöglichen, einen oberen Teil der Drucksache (110) über einer oberen Oberfläche der Bedienkonsole (102R) zu positionieren, und
wobei von dem Seil (140) ein Ende mit der Drucksache (110) verbunden ist und das andere Ende mit einer Position der Schutzeinheit (5) oberhalb der Aufbewahrungsstruktur (111) verbunden ist.

2. Arbeitsmaschine gemäß Anspruch 1, umfassend:
eine Armlehne (105R), die auf der Bedienkonsole (102R) und bezogen auf den Maschinenkörper (2) hinter dem Bedienhebel (101R) angeordnet ist; und
einen Planierschild-Bedienhebel (106), der bezogen auf die Armlehne (105R) dem Sitz (6) gegenüber angeordnet und in der Vor-Rück-Richtung (K1) schwenkbar gelagert ist;
wobei die Aufbewahrungsstruktur (111) bezogen auf den Maschinenkörper (2) hinter dem Bedienhebel (101R), der Armlehne (105R) und dem Planierschild-Bedienhebel (106) angeordnet ist.

3. Arbeitsmaschine gemäß Anspruch 1 oder 2, umfassend:
eine Auskleidung (60), die an der Schutzeinheit (5) befestigt ist,
wobei mindestens ein Teil der Aufbewahrungsstruktur (111) untrennbar mit der Auskleidung (60) ausgebildet ist.

4. Arbeitsmaschine gemäß einem der Ansprüche 1 bis 3,
wobei die Schutzeinheit (5) umfasst:
eine Rahmenstruktur (31), die eine Mehrzahl von Säulen (32) aufweist; und
eine äußere Abdeckung (50), die an der Rahmenstruktur (31) befestigt ist,
wobei eine Innenfläche der Aufbewahrungsstruktur (111), die in die Schutzeinheit (5) hinein weist, durch die äußere Abdeckung (50) definiert ist.

5. Arbeitsmaschine gemäß einem der Ansprüche 1 bis 4,
wobei die Schutzeinheit (5) einen Brückenrahmen (40), der sich in einer Vor-Rück-Richtung (K1) des Maschinenkörpers (2) erstreckt, und ein Fensterelement (49) aufweist, das eine obere Seitenscheibe (49a) hat, die oberhalb des Brückenrahmens (40) angeordnet ist, und eine untere Seitenscheibe (49b) hat, die unterhalb der Brückenrahmens (40) angeordnet ist, wobei der Brückenrahmen (40) und das Fensterelement (49) auf der Fläche vorgesehen sind, die zu der Bedienkonsole (102R) hin weist, an der die Aufbewahrungsstruktur (111) vorgesehen ist, und
wobei die Aufbewahrungsstruktur (111) unterhalb der unteren Seitenscheibe (49b) des Fensterelements (49) angeordnet ist, und
wobei das andere Ende des Seils (140) mit dem Brückenrahmen (40) verbunden ist.

6. Arbeitsmaschine gemäß einem der Ansprüche 1 bis 5,
wobei die Aufbewahrungsstruktur (111) eine untere Wandung (131) zum Abstützen eines unteren mittleren Teils der Drucksache (110) aufweist, wobei die untere Wandung (131) bezogen auf den Maschinenkörper (2) nach hinten unten geneigt ist.

7. Arbeitsmaschine gemäß einem der Ansprüche 1 bis 6, umfassend:
eine Auskleidung (60), die an der Schutzeinheit (5) befestigt ist, wobei die Auskleidung (60) ein hinteres Auskleidungselement (78) enthält, das eine Verschlussplatte (112) und eine Haltelasche (115) aufweist, die einander in einer Breitenrichtung des Maschinenkörpers (2) gegenüberliegen, um so zwischen sich einen Aufbewahrungsplatz (E) der Aufbewahrungsstruktur (111) zu definieren, um die Drucksache (110) aufzubewahren.

8. Arbeitsmaschine gemäß einem der Ansprüche 1 bis 7, umfassend:
eine Auskleidung (60), die an der Schutzeinheit (5) befestigt ist, wobei die Auskleidung (60) ein hinteres Auskleidungselement (78) enthält, das untrennbar ausgebildet ist, um einen Aufbewahrungsplatz (E) der Aufbewahrungsstruktur (111) zu definieren, um die Drucksache (110) aufzubewahren.

## Revendications

1. Machine de travail (1) comprenant :
un corps de machine (2) ;
un siège d'opérateur (6) monté sur le corps de machine (2) ;
une base d'opération (102R) disposée sur un côté latéral du siège d'opérateur (6) ;
une unité de protection (5) recevant le siège d'opérateur (6) comportant une partie de plaque de siège (6A) et une partie de dossier (6B), et la base d'opération (102R) ;
une matière imprimée (110) ; et
une structure de stockage (111) configurée pour stocker la matière imprimée (110), et prévue entre l'unité de protection (5) et la base d'opération (102R), et
un levier d'opération (101R) disposé sur la base d'opération (102R) pour l'opération d'un dispositif de travail (4) prévu sur le corps de machine (2),
la machine de travail **caractérisée en ce qu'**elle comprend en outre :
une chaîne (140) de matériau flexible reliant la matière imprimée (110) et l'unité de protection (5),
dans laquelle la structure de stockage (111) est disposée à l'arrière du levier d'opération (101R), et configurée pour permettre à la matière imprimée (110) stocké dans celle-ci de positionner la matière imprimée (110) à l'avant de la partie de dossier (6B) par rapport au corps de machine (2),
dans laquelle la structure de stockage (111) est configurée pour permettre à la matière imprimée (110) stockée dans celle-ci d'être inclinée de sorte qu'une partie supérieure de la matière imprimée (110) soit positionnée vers l'arrière par rapport à une partie inférieure de celle-ci, et pour permettre à la matière imprimée (110) stockée dans celle-ci de positionner une partie supérieure de la matière imprimée (110) au-dessus d'une face supérieure de la base d'opération (102R), et
dans laquelle la chaîne (140) a une extrémité reliée à la matière imprimée (110) et l'autre extrémité reliée à une position de l'unité de protection (5) au-dessus de la structure de stockage (111).

2. Machine de travail selon la revendication 1, comprenant :
un accoudoir (105R) disposé sur la base d'opération (102R) et à l'arrière du levier d'opération (101R) par rapport au corps de machine (2) ; et
un levier d'opération de bouteur (106) disposé à l'opposé du siège (6) par rapport à l'accoudoir (105R) et supporté de manière rotative dans la direction avantarrière (K1) ;
dans laquelle la structure de stockage (111) est disposée à l'arrière du levier d'opération (101R), de l'accoudoir (105R) et du levier d'opération de bouteur (106) par rapport au corps de machine (2).

3. Machine de travail selon la revendication 1 ou 2, comprenant :
une doublure (60) fixée à l'unité de protection (5),
dans laquelle au moins une partie de la structure de stockage (111) est formée d'un seul tenant avec la doublure (60).

4. Machine de travail selon l'une des revendications 1 à 3,
dans laquelle l'unité de protection (5) comprend :
une structure de cadre (31) comportant une pluralité de piliers (32) ; et
un capot extérieur (50) fixé à la structure de cadre (31),
dans laquelle une face intérieure de la structure de stockage (111) faisant face à l'intérieur de l'unité de protection (5) est définie par le capot extérieur (50) .

5. Machine de travail selon l'une des revendications 1 à 4,
dans laquelle l'unité de protection (5) comporte un cadre de pont (40) s'étendant dans une direction avantarrière (K1) du corps de machine (2), et un organe fenêtre (49) ayant une vitre latérale supérieure (49a) disposée au-dessus du cadre de pont (40) et une vitre latérale inférieure (49b) disposée au-dessous du cadre de pont (40), le cadre de pont (40) et l'organe fenêtre (49) étant prévus sur la face de ceux-ci faisant face à la base d'opération (102R), sur laquelle la structure de stockage (111) est prévue, et
dans laquelle la structure de stockage (111) est disposée sous la vitre latérale inférieure (49b) de l'organe fenêtre (49), et
dans laquelle l'autre extrémité de la chaîne (140) est reliée au cadre de pont (40).

6. Machine de travail selon l'une des revendications 1 à 5,
dans laquelle la structure de stockage (111) comporte une paroi inférieure (131) pour supporter une partie centrale inférieure de la matière imprimée (110), la paroi inférieure (131) étant inclinée vers l'arrière vers le bas par rapport au corps de machine (2).

7. Machine de travail selon l'une des revendications 1 à 6, comprenant :
une doublure (60) fixée à l'unité de protection (5), la doublure (60) contenant un organe doublure arrière (78) qui comporte une plaque de fermeture (112) et une languette de retenue (115) opposées l'une à l'autre dans une direction de largeur du corps de machine (2) de manière à définir un espace de stockage (E) de la structure de stockage (111) entre eux pour le stockage de la matière imprimée (110).

8. Machine de travail selon l'une des revendications 1 à 7, comprenant :
une doublure (60) fixée à l'unité de protection (5), la doublure (60) contenant un organe doublure arrière (78) qui est formé d'un seul tenant pour définir un espace de stockage (E) de la structure de stockage (111) pour le stockage de la matière imprimée (110).
